# EUROPEAN PATENT APPLICATION

(11) **EP 3 254 914 A1**
(43) Date of publication of application: **13.12.2017**
(21) Application number: 16173902.4
(22) Date of filing: 10.06.2016
(51) Int. Cl.: B60R 22/46

(54) **CLUTCH FOR A SEAT BELT TENSIONER AND METHOD FOR TRANSFERRING THE CLUTCH FROM AN ENGAGED INTO A DECOUPLED POSITION**

(71) Applicant: TRW Automotive GmbH, 73553 Alfdorf (DE); TRW Polska Sp.z.o.o., 42-200 Czestochowa (PL)
(72) Inventor: Singh, Yashwanth, 73553 Alfdorf (DE); Jura, Jan, 42-200 Cz stochowa (PL)
(74) Representative: ZF TRW Patentabteilung

(57) **Abstract**

A clutch (2000) for a seat-belt tensioner in a vehicle has a driving element (2002) adapted for being rotated in a driving direction (D) and in a releasing direction (R) and a driven element (2006) connectable with a seat-belt spool, the driving element (2002) and the driven element (2006; 3006) having a common rotation axis (A). A pawl (2016) is pivotally held on the driving element (2002) that can be pivoted around a pivoting axis (2018). The clutch (2000) is adapted to assume a neutral position in which the pawl (2016) is not in engagement with the driven element (2006) and from which it can be pivoted radially inwards by turning the driving element (2002) in driving direction (D), an engaged position in which the pawl (2016) engages the driven element (2006) and couples the driving element (2002) with the driven element (2006), and a decoupled position in which the pawl (2016) is not in engagement with the driven element (2006) and cannot be engaged with the driven element (2006) by turning the driving element (2002) in driving direction (D). A clutch disk element (2022) is provided having a clutch disk ring (2024) with an outer essentially circular circumference and a clutch disk arm (2036) extending inwards from the clutch disk ring (2024), the clutch disk arm (2036) having a guiding geometry (2038) that interacts with a guiding geometry (2040) provided on the pawl (2016) to guide the pawl (2016). A retainer ring (2054) is provided surrounding the outer circumference of the clutch disk ring (2024) and being coupled by friction with the clutch disk ring (2024), the retainer ring (2054) being configured for a limited rotation relative to a retaining structure (2058) arranged immovable on a clutch housing. The clutch (2000) is configured so that in the decoupled position the clutch disk ring (2024) is disabled from rotating relative to the pawl (2016) when the driving element (2002) rotates in driving direction (D).

## Description

The invention relates to a clutch for a seat belt tensioner of a seat belt system in a vehicle and a method for transferring the clutch into different positions.

Reversible seat belt tensioners are used to increase the safety of the vehicle occupants and their driving comfort. A reversible drive, usually an electric motor, is coupled with a seat belt spool axis to rotate the seat belt spool and to take in loose seat belt webbing, e.g. in situations in which a control unit decides that this could be beneficial. Then, a clutch is closed that couples the reversible drive with a seat belt spool of a seat belt retractor, and the seat belt spool is rotated by the reversible drive to draw in seat belt webbing. In the regular operating mode of the seat belt system the clutch is open and the seat belt spool is not impeded by the reversible drive so that the seat belt retractor can draw in and give out the seat belt webbing without any hindrance by the reversible drive.

An example for a clutch for a seat belt tensioner is shown in DE 10 2011 119 343 A1.

Usually, seat belt tensioners are provided with a single-use pyrotechnic drive additionally to the reversible drive, the pyrotechnic drive being only activated in case of an actual crash. The seat belt spool is rotated by the pyrotechnic drive with a far higher rotational velocity than by the reversible drive. So as not to interfere with the pyrotechnic drive, the clutch should be decoupled from the seat belt spool when the pyrotechnic drive is activated. Further, a load limiting device reducing the force acting on the occupant in a crash situation is usually provided that should also operate unhindered by the reversible drive.

It is one object of the invention to provide a clutch for a seat belt tensioner for reliably keeping the clutch decoupled from the seat belt spool.

This object is achieved with a clutch for a seat-belt tensioner in a vehicle that comprises a driving element adapted for being rotated in a driving direction and in a releasing direction and a driven element connectable with a seat-belt spool, the driving element and the driven element having a common rotation axis. A pawl is pivotally held on the driving element that can be pivoted around a pivoting axis. The clutch is able to assume a neutral position in which the pawl is not in engagement with the driven element and from which it can be pivoted radially inwards by turning the driving element in driving direction, an engaged position in which the pawl engages the driven element and couples the driving element with the driven element, and a decoupled position in which the pawl is not in engagement with the driven element and cannot be engaged with the driven element by turning the driving element in driving direction. A clutch disk element having a clutch disk ring with an outer essentially circular circumference and a clutch disk arm extending inwards from the clutch disk ring is provided, the clutch disk arm having a guiding geometry that interacts with a guiding geometry provided on the pawl to guide the pawl. Further, the clutch comprises a retainer ring surrounding the outer circumference of the clutch disk ring and being coupled by friction with the clutch disk ring, at least in the neutral position. The retainer ring is configured for a limited rotation relative to a retaining structure arranged immovably on a clutch housing. The clutch is configured so that in the decoupled position the clutch disk ring is disabled from rotating relative to the pawl when the driving element rotates in driving direction.

The clutch will be transferred into its decoupled position when a pyrotechnic drive that is provided in addition to the reversible drive is being activated. The pyrotechnic drive rotates the seat belt spool axis in driving direction with a velocity far higher than the reversible drive. When the pyrotechnic drive is active, the reversible drive should be disengaged from the seat belt spool axis so as not to hinder the function of the pyrotechnic drive. To ensure that the clutch cannot unintentionally be reengaged from the decoupled position by rotating the driving element in driving direction, according to the invention the clutch disk ring does not rotate relative to the driving element and the pawl mounted on the driving element. The guiding geometries of the pawl and of the clutch disk arm that is fixed to the clutch disk ring, preferably do not move relative to each other so that no guiding motion will result that would pivot the pawl radially inwards.

Preferably, also no force component acts on the pawl that is directed radially inwards when the driving element rotates in driving direction and the pawl is in the decoupled position so that it is impossible to pivot the pawl radially inwards and to transfer the clutch back into the engaged position by rotating the driving element in driving direction when it is in the decoupled position.

The clutch may be designed such that by a rotation of the driving element in the releasing direction the pawl is re-transferred into its neutral position. This is e.g. achieved by enabling a relative rotation between the pawl and the clutch disk ring in the releasing direction. For instance, the pawl may be locked in a latching connection with the clutch disk arm in the decoupled position that is kept in its closed state when the driving element rotates in driving direction, but can be opened by rotating the driving element away from the clutch disk arm in the releasing direction.

However, there are preferred embodiments in which a relative rotation between the driving element and the clutch disk ring is prevented also when the driving element rotates in releasing direction. Then, the clutch disk ring permanently rotates together with the driving element both in the driving and in the releasing direction.

To achieve this, in the decoupled position the relative position of the clutch disk arm and the pawl may e.g. deviate from a relative position of the clutch disk arm and the pawl in the neutral position.

In one possible alternative design, in the decoupled position the geometry of the clutch disk ring deviates from the geometry of the clutch disk ring in the neutral position.

The decoupled position of the clutch may be reached without the kinetic energy of the pawl needing to be high enough to deform any kind of deformable element, e.g. to close a latching connection, that would hinder the pawl from pivoting radially inwards again.

In one preferred embodiment, the pawl has a decoupling geometry located between and distanced from left and right side guiding faces of the guiding geometry of the pawl. In particular, this decoupling geometry can be a web-like protrusion being arranged in a recess in the pawl limited by the left and right side guiding faces.

Further, preferably the clutch disk arm is bifurcated into a first and second branch that are distanced from each other and, in the decoupled position, the web-like protrusion of the pawl is located between the first and second branches so that the pawl is blocked from returning in to the engaged position and into the neutral position. No latching connection is necessary as the blocking of the pawl is mostly or completely achieved by the interaction of the guiding geometries of the pawl and the clutch disk arm. It is possible, however, that the web-like protrusion and/or a branch of the clutch disk arm are slightly elastically deformed during the transfer into the decoupled position. Also, these components may generate a slight clamping force or increased frictional force between the pawl and the clutch disk arm in the decoupled position.

The guiding geometries are preferably chosen such that the driving element cannot transfer a force to the pawl that would result in the pawl pivoting radially inwards. Thereby, the locking of the pawl does not depend on the amount of force applied to the pawl by the driving element as no radially inwards directed force component will result.

For instance, in the decoupled position, the guiding face on the pawl facing in the driving direction can be oriented essentially along the radial direction so that a force in tangential direction is exerted on the pawl when the driving element rotates in the driving direction.

Also, a guiding face on the pawl facing in releasing direction can be oriented in an outward direction so that a force with a radially outward directed force component is exerted on the pawl when the driving element rotates in releasing direction.

In the engaged position, one of the arms of the clutch disk arm, in particular. the branch which in the driving direction is the forward branch, preferably stays in contact with the web-like protrusion of the pawl. In this way, an exact relative position between the pawl and the clutch disk arm is maintained in the engaged position.

Should the pyrotechnic drive be activated while the clutch is in the engaged position, therefore, the guiding geometries of the pawl and of the clutch disk arm will interlock as the pawl is pivoted radially outwards and assumes its decoupled position. For instance, the web-like protrusion on the pawl will slide in between the two branches of the clutch disk arm.

However, should the reversible drive rotate the driving element in the releasing direction without the pyrotechnic drive being activated, the clutch disengages in a normal way. The pawl is rotated relative to the clutch disk arm until both branches of the clutch disk arm have passed the decoupling geometry on the pawl so that, on pivoting the pawl radially outwards, the decoupling geometry lies not in between the clutch disk arm branches but besides both branches of the clutch disk arm. From this neutral position, the clutch can be reengaged again by rotating the driving element in the driving direction.

In another preferred embodiment, in the decoupled position, the friction between the retainer ring and the clutch disk ring is reduced to such an amount that the friction coupling between the retainer ring and the clutch disk ring is neutralized. When the frictional force between the retainer ring and the clutch disk ring drops below a certain threshold value, the clutch disk ring will not be retained by the retainer ring and, therefore, will not lag behind relative to the driving element, and therefore, the pawl. However, without a relative motion between the clutch disk arm and the pawl, the pawl cannot be pivoted radially inwards. Therefore, by neutralizing the friction coupling between the retainer ring and the clutch disk ring, the pawl is effectively kept in the decoupled position permanently.

An easy way to reduce the friction between the retainer ring and the clutch disk ring is to reduce the diameter of the outer circumference of the clutch disk ring. To achieve this, the clutch disk ring may be discontinuous in circumferential direction and the first and second circumferential ends of the clutch disk ring may be biased outwardly in a circumferential direction. A latching connection is provided between the circumferential ends. Between the first and second circumferential ends lies a gap which gives the clutch disk ring a certain flexibility and allows the clutch disk ring to be compressed.

The latching connection can, for instance, have two latching elements, one of the latching elements being arranged at the first circumferential end and one on the second circumferential end of the clutch disk ring. The latching elements may be e.g. a locking pin and two locking arms, where the locking pin can slip between the locking arms when the circumferential ends of the clutch disk ring are brought closer together by a compression of the clutch disk ring. Of course, the latching connection can be realized in any suitable way.

When the latching connection is closed, the diameter of the outer circumference of the clutch disk ring is preferably permanently reduced. The clutch disk ring then can freely turn inside the retainer ring, and the retainer ring is not able to exert any frictional forces on the clutch disk ring that would keep the clutch disk ring lagging with regard to the driving element.

The circumferential ends of the clutch disk ring may be are forced apart along the circumferential direction additionally by an expansion spring bridging the gap and providing at least part of the frictional force between the retainer ring and the clutch disk ring. Preferably, the latching connection is arranged parallel to the expansion spring bridging the gap between the first and second circumferential end. In the closed state of the latching connection, the expansion spring is compressed to a higher degree than when the latching connection is in its open state. Effectively, the expansion spring can be neutralized by the closed latching connection.

As long as the latching connection between the circumferential ends of the clutch disk ring is open, the clutch works regularly, the pawl being able to pivot in the engaged position and back into the neutral position, depending on the rotational direction of the driving element.

However, when the latching connection is closed, a frictional force between the clutch disk ring and the retainer ring is reduced so far that the clutch disk element can no longer be retained by the retainer ring and always rotates together with the driving element so that no relative rotation with regard to the driving element is possible. The clutch stays permanently in its decoupled position.

The invention also relates to a method for transferring a clutch as described above from the engaged position into the decoupled position. The clutch disk ring is compressed by an impulse transmitted by the driven element to the clutch disk ring in the initial phase of the decoupling process, and the latching connection is closed during the compression of the clutch disk ring.

In the initial phase of the activation of the pyrotechnic drive, lateral forces are acting on the clutch disk ring caused by the sudden acceleration of masses in the pyrotechnic drive, for instance. A short lateral impulse is generated that is transmitted to the belt spool axis and, therefore, to the driven element and, eventually, the clutch disk ring. From this results a momentary compression of the clutch disk ring which, in turn, brings the components of the latching connection at the two circumferential ends of the clutch disk arms closer together, whereby the components of the latching connection slide into each other and close the latching connection.

Several preferred embodiments of the invention are described in detail in the following with reference to the attached drawings, in which:
- Figure 1 shows a schematic plan view of a clutch for a seat belt tensioner according to a first embodiment of the invention, in a neutral position of the clutch;

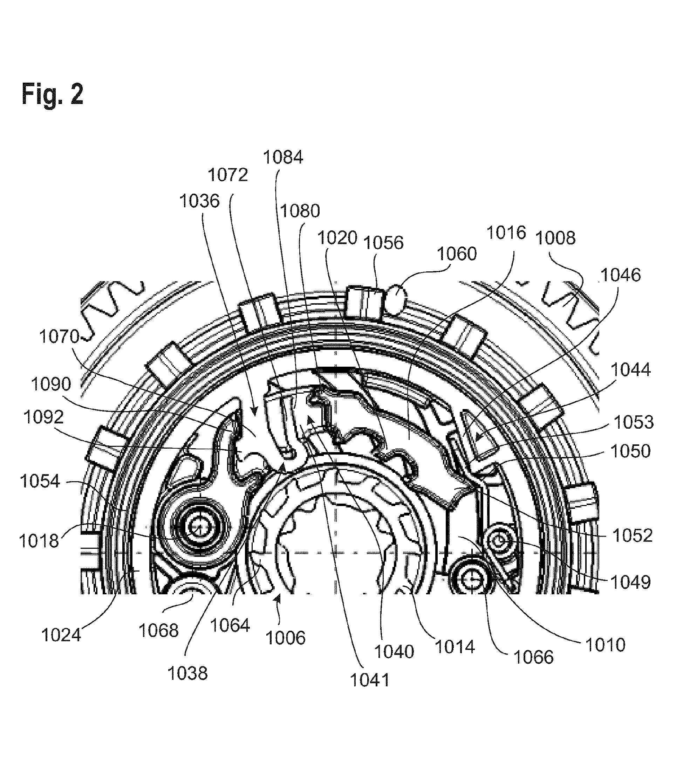

- Figure 2 shows an enlarged section of Figure 1;
- Figure 3 shows the clutch of Figure 1 in between the neutral position and an engaged position;
- Figure 4 shows the clutch of Figure 1 in an engaged position;
- Figures 5 and 6 show the clutch of Figure 1 in a decoupled position;
- Figures 7 and 8 show the clutch of Figure 1 in positions during the transfer from the decoupled position back into the neutral position;
- Figure 9 shows the clutch of Figure 1 in a tip-to-tip position;
- Figure 10 shows an exploded view of the clutch of Figure 1;
- Figures 11 to 15 show several details of the clutch of Figure 1;
- Figures 16, 16a and 17, 17a show variations of a ramp structure of the clutch of Figure 1;
- Figures 18 to 24 show further details of the clutch of Figure 1;
- Figure 25 - 28c show details of the clutch of Figure 1 optimizing the friction behavior between clutch disk element and retainer ring;
- Figures 29 to 31 show details of a driven element of the clutch of Figure 1;
- Figures 32 to 40 show schematic plan views of a clutch according to a second embodiment of the invention in different positions;
- Figure 41 shows a schematic plan view of a clutch according to a third embodiment of the invention in the neutral position;
- Figure 42 shows an enlarged view of the clutch of Figure 41;
- Figure 43 shows a schematic plan view of the clutch of Figure 41 in an engaged position;
- Figure 44 shows an enlarged detail of the clutch of Figure 41;
- Figure 45 shows the clutch of Figure 41 in a position between the engaged position and the neutral position;
- Figure 46 shows the clutch of Figure 41 in between the engaged position and the decoupled position;
- Figure 47 shows the clutch of Figure 41 in the decoupled position;
- Figure 48 shows the clutch of Figure 41 in a tip-to-tip engagement position;
- Figure 49 shows a schematic plan view of a clutch according to a fourth embodiment of the invention in the neutral position;
- Figure 50 shows an enlarged detail of Figure 49;
- Figure 51 shows a schematic plan view of a clutch according to a fifth embodiment of the invention in a neutral position;
- Figure 52 show the clutch of Figure 51 during engagement;
- Figure 53 shows an enlarged detail of Figure 51;
- Figure 54 shows a schematic perspective view of parts of the clutch of Figure 51;
- Figure 55 shows the clutch of Figure 51 in the engaged position;
- Figure 56 shows a detailed view of the clutch of Figure 55;
- Figures 57 and 58 show the clutch of Figure 51 in the decoupled position;
- Figures 59 and 60 show the clutch of Figure 51 during the transfer from the decoupled position back into the neutral position;
- Figure 61 shows an explosion view of the clutch of Figure 51; and
- Figure 62 shows the clutch of Figure 1 in a seat belt tensioner.

The figures show clutches 1000, 1000', 2000, 3000, 4000 for a seat belt tensioner 100 in a vehicle in different embodiments.

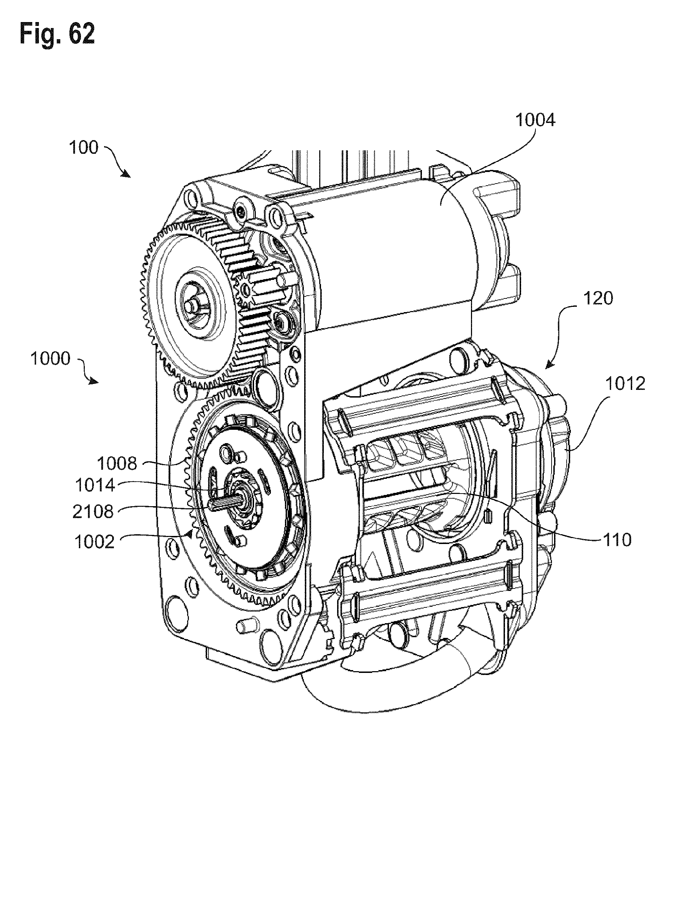

The seat belt tensioner 100 is connected to a seat belt spool 110 supported rotatable in a frame of a seat belt retractor 120 that can take up and give out a seat belt webbing (see Figure 62).

Common features of all embodiments will be discussed in the following with reference to the first embodiment. In the further embodiments, partially, reference numbers increased by thousands are used for already known components that are realized in identical or similar manner.

Generally, all features of the discussed embodiments can be exchanged or combined in the discretion of a person skilled in the art.

The clutch 1000 has a driving element 1002 that can be connected with a reversible drive 1004, and a driven element 1006 that can be connected with a seat belt spool axis. The driving element 1002 and the driven element 1006 are rotatable around a common rotation axis A. When a radial direction r and a circumferential direction U are discussed, these directions are always related to the common rotation axis A

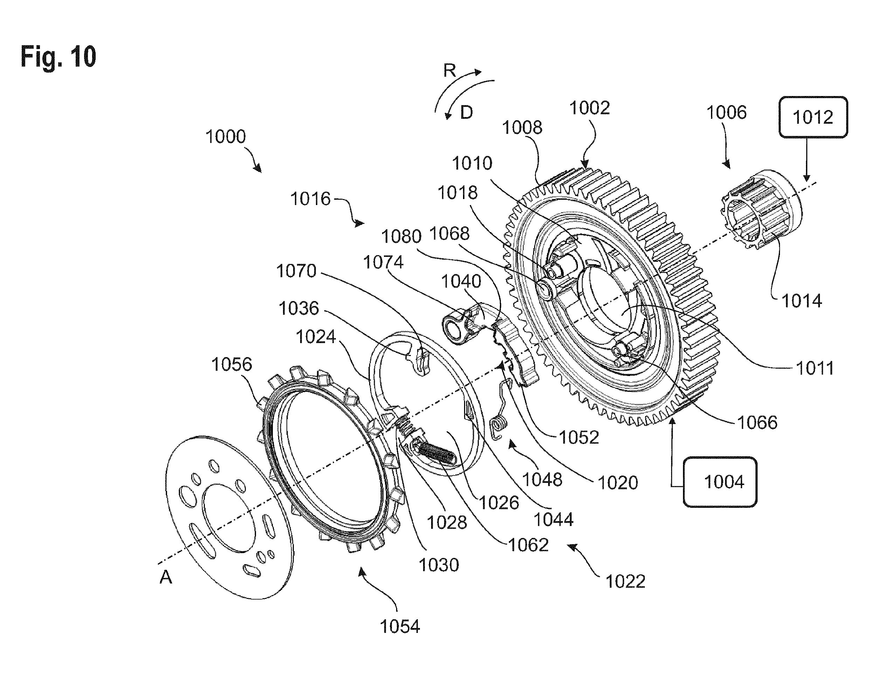

Further, the driving element 1002 has a driving gear 1008 that is coupled with regard to rotation with a driving element disk 1010 that will be described further in more detail. The driving gear 1008 and the driving element disk 1010 can be formed integrally, and the driving gear 1008 can extend in the same plane as the driving element disk 1010 and can surround the driving element disk 1010 (see also Figure 10).

The seat belt spool is coupled without play with the driven element 1006 of the clutch 1000 so that the seat belt spool and the driven element 1006 rotate always in the same direction and with the same velocity.

The driving element disk 1010 has a centered opening 1011 through which the driven element 1006 extends.

The reversible drive 1004 normally is an electromotor and can turn the driving element 1002 in the driving direction D (counterclockwise in the figures) and in the reversed direction in a releasing direction R (clockwise in the figures).

In one of its functions the clutch 1000 serves to couple the reversible drive 1004 to the seat belt spool and to turn the driving element 1002 and, therefore, the seat belt spool in the driving direction D to wind up seat belt webbing on the seat belt spool to tighten the seat belt around a vehicle occupant.

This kind of seat belt tensioning takes place e.g. when an electronic control unit (not shown) detects an imminent dangerous situation in which the seat belt should be tensioned as a precaution. If the critical situation passes, the clutch 1000 will be disengaged again so that the seat belt spool again can turn unhindered in both directions.

Additionally to the reversible drive 1004 a pyrotechnic drive 1012 is provided. The pyrotechnic drive 1012 (indicated in Figure 10) can engage the seat belt spool and rotate the seat belt spool in the driving direction D. The pyrotechnic drive 1012 is activated in case of an actual crash only and will rotate the seat belt spool to take up seat belt webbing. The rotation of the seat belt spool in driving direction D is a lot faster when the pyrotechnic drive 1012 is active than when the reversible drive 1004 is active.

The pyrotechnic drive 1012 may for instance operate with a so-called snake, that is accelerated by a pyrotechnic charge and that sets the seat belt spool in rotation. The snake is e.g. a flexible, deformable plastic cylinder that is accommodated moveable in the pyrotechnic drive 1012 and that is displaced by gas pressure. The moving snake interacts with a drive pinion connected to the seat belt spool axis to rotate the seat belt spool.

The driven element 1006 comprises a driven gear 1014.

The clutch 1000 further comprises a pawl 1016 that is pivotally held on the driving element disk 1010 at a pivot axis 1018 extending perpendicular to the driven element disk plane. The pawl 1016 has a curved shape that approximately follows the curvature of the driven gear 1014. The pawl 1016 extends in this example over a section of approximately 145° from the pivot axis 1018.

The pawl 1016 can be pivoted around the pivot axis 1018 into several positions.

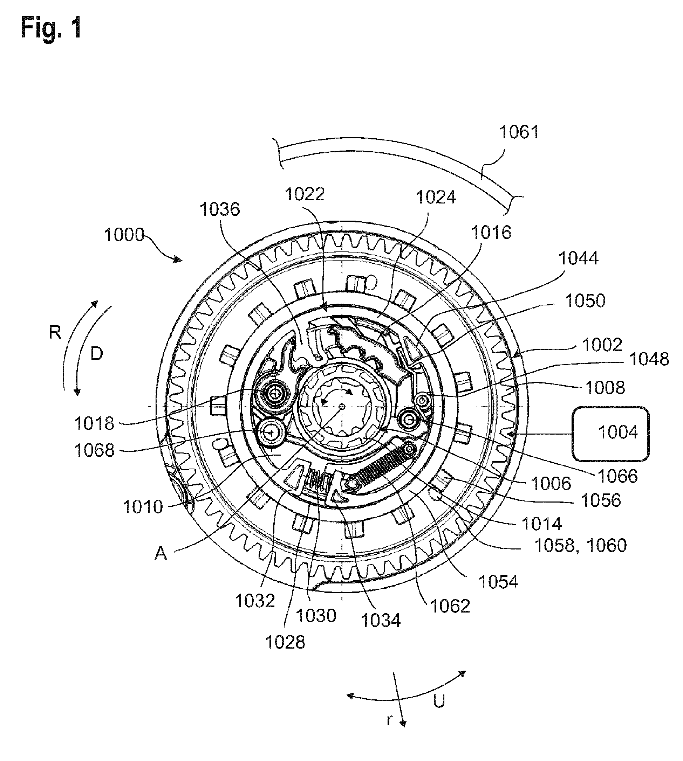

Figure 1 shows the pawl 2016 and the clutch in a neutral position in which the pawl 1016 does not engage the driven gear 1014 of the driven element 1006. The positions of the pawl 1016 are also used to describe the position or state of the complete clutch 1000 in the following.

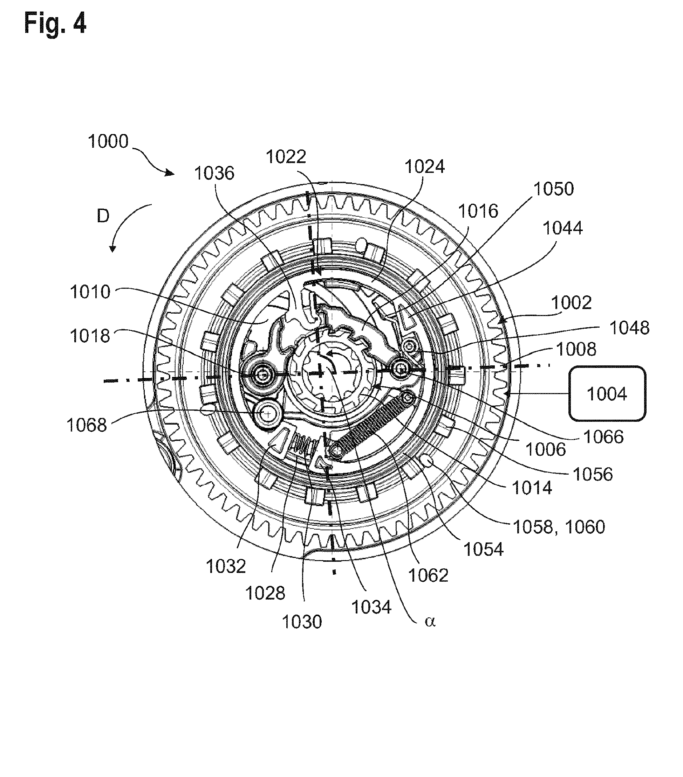

When the pawl 1016 is rotated radially inwards, it comes into contact with the driven gear 1014. When teeth 1020 formed on the radial inner side of the pawl 1016 mesh with a toothing of the driven gear 1014, the pawl 1016 and also the complete clutch 1000 are in an engaged position (see for instance Figure 4). In the engaged position force is transmitted from the reversible drive 1004 to the driven element 1006 and, therefore, to the seat belt spool.

The pawl 1016 is moved from the neutral position into the engaged position by interaction with a clutch disk element 1022. The clutch disk element 1022 includes a clutch disk ring 1024 that has an outer circumference that is essentially circular and that surrounds an opening 1026 (see Figure 10).

Throughout this application, indications like "radially inwards" or "radially outwards" relate not only strictly to the mathematical radial direction but also in general to motions directed further into the opening 1026 defined by the clutch disk element 1022 or further towards the edge of this opening.

The clutch disk ring 1024 is discontinuous in circumferential direction U, and the resulting gap 1028 is bridged by an expansion spring 1030 that presses the circumferential ends 1032, 1034 of the clutch disk ring 1024 apart in circumferential direction.

Further, the clutch disk element 1022 comprises a clutch disk arm 1036 extending into the opening 1026. The clutch disk arm 1036 has a guiding geometry 1038 that interacts with a guiding geometry 1040 on the pawl 1016. The pawl guiding geometry 1040 is realized at the circumferential flanks of an axial recess 1041 in the surface of the pawl 1016. The pawl 1016 lies in a plane parallel to that of the driving element disk 1010 and pivots essentially radially inwards towards the rotation axis A. In the axial recess 1041, part of the material of the pawl 1016 is lacking so that the thickness of the pawl 1016 in axial direction is reduced with regard to the rest of the pawl 1016.

The guiding geometries 1038, 1040 on the clutch disk arm 1036 and the pawl 1016 will be described in detail later on with regard to the individual embodiments.

The clutch disk ring 1024 is surrounded by a retainer ring 1054 that is coupled by friction at its inner circumference with the outer circumference of the clutch disk ring 1024. The friction is at least partly provided by the expansion spring 1030 pressing the circumferential ends 1032, 1034 of the clutch disk ring 1024 apart. The clutch disk element 1022 and the retainer ring 1054 are coupled by friction only.

The retainer ring 1054 has a plurality of radially extending spokes 1056 that are arranged at regular distances along the outer periphery of the retainer ring 1054. A retaining structure 1058 in form of several stopping pins 1060 is provided that are arranged immovable on a clutch housing 1061, every stopping pin 1060 being arranged between two adjacent spokes 1056 of the retainer ring 1054. The retainer ring 1054, therefore, can rotate between two positions only and is in each of the two positions in contact with the stopping pins 1060. The maximum angle of rotation between the two positions of the retainer ring 1054 is determined by the distance of two adjacent spokes 1056 and can be chosen for instance between 10° and 30°.

Instead of the retaining structure 1058 described above, any different kind of retaining structure could be provided that allows a limited rotation of the retainer ring 1054 in both directions D, R.

The general design of the clutch 1000 is also shown in Figure 10.

### First embodiment of the clutch

In a first embodiment of the clutch 1000, the clutch disk element 1022 further comprises a ramp structure 1044 that extends into the opening 1026 and that has a contact face 1046 for interaction with the pawl 1016.

On the face of the driving element disk 1010 a spring element 1048 is attached at a fixation pin 1049 located near one of the ends of the spring element 1048. Between the fixation pin 1049 and an end of the spring element 1048 a pawl end stop 1050 is formed on a flexible portion of the spring element, against which a free end 1052 of the pawl 1016 lies in the neutral position (see for instance Figure 1). Between the end of the spring element 1048 and the pawl end stop 1050 also a contact section 1053 is formed that comes into contact with the pawl 1016 in the decoupled position, as will be described below.

To transfer the clutch 1000 into its closed state or engaged position, correspondingly, the pawl 1016 has to be brought into engagement with the driven gear 1014.

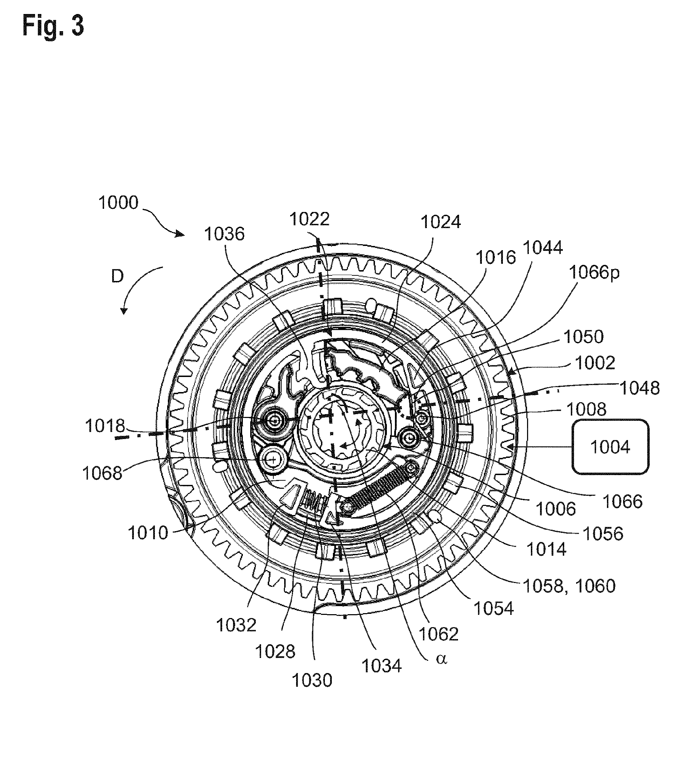

As the reversible drive 1004 is activated, the driving element 1002 starts rotating in driving direction D. In the neutral position the spokes 1056 of the retainer ring 1054 are distanced in driving direction D from the nearest stopping pin 1060. Therefore, initially the driving element 1002 rotates together with the pawl 1016. The clutch disk element 1022 is entrained by a weak spring connection 1062 between the driving element 1002 and the clutch disk ring 1024. Due to the frictional force between the clutch disk element 1022 and the retainer ring 1054, the retainer ring 1054 rotates together with the clutch disk element 1022, until the spokes 1056 come into contact with the stopping pins 1060 of the retaining structure 1058. On contact with the stopping pins 1060, the retainer ring 1054 stops rotating and, due to the frictional force between these components, the clutch disk element 1022 also is stopped from rotating. This results in the driving element 1002 rotating relative to the clutch disk arm 1036, as shown in Figure 3.

The guiding geometry 1038 on the clutch disk arm 1036 comes into contact with the guiding geometry 1040 on the pawl 1016 in Figure 3, and the pawl 1016 starts pushing against the clutch disk arm 1036.

The interaction of the guiding geometries 1038, 1040 on the clutch disk arm 1036 and on the pawl 1016 urges the pawl 1016 inwards, until teeth 1020 on the radially inward side of the pawl 1016 come into contact with teeth 1064 on the driven gear 1014 of the driven element 1006. The teeth 1020 of the pawl 1016 engage with the teeth 1064 of the driven gear 1014, and the driven gear 1014 is entrained with the pawl 1016.

The inward movement of the pawl 1016 continues until the free pawl end 1052 comes into contact with a pawl stop 1066 fixedly arranged on the driving element disk 1010. The pawl stop 1066 now also transfers load to the pawl 1016 and, therefore, to the driven gear 1014. The center of the pawl stop 1066 lies on straight line with the rotation axis A and the pawl pivot axis 1018.

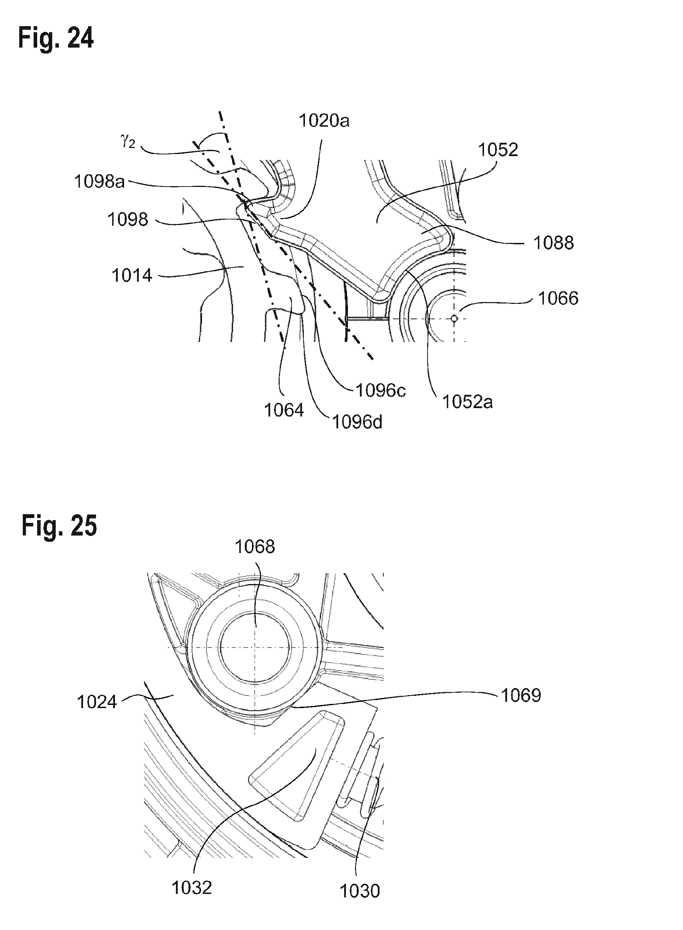

The relative motion between the driving element 1002 and the clutch disk element 1022 continues until a clutch disk stop 1068, in this case a protrusion extending axially from the driving element disk 1010, abuts against the first circumferential end 1032 of the clutch disk ring 1024, which is formed here as a projection extending inwards into the opening 1026 (see also in detail in Figs 25 to 28c). From this moment on, the driving element 1002 pushes the clutch disk element 1022 in driving direction D so that the clutch disk element 1022 rotates together with the driving element 1002 and slides inside the retainer ring 1054. The retainer ring 1054 stays in the position shown in Figures 3 and 4.

The clutch disk stop 1068 and the first circumferential end 1032 are arranged near the inner circumference of the clutch disk ring 1024. Further, a face 1069 of the first circumferential end 1032 against which the clutch disk stop 1068 abuts, is directed essentially in tangential direction with regard to the clutch disk ring 1024. Therefore, the force acting on the clutch disk element 1022, when it is entrained by the driving element 1002, acts essentially in tangential direction, minimizing additional frictional forces at the interface between the clutch disk ring 1024 and the retainer ring 1054 when the clutch disk element 1022 rotates relative to the retainer ring 1054.

The distance between the clutch disk stop 1068 and the expansion spring 1030 should be as small as possible. In this example, the clutch disk stop 1068 lies against the attachment of the end of the expansion spring 1030. For this reason, the clutch disk ring 1024 exerts a compressing force on the expansion spring 1030 and thereby further reduces the frictional forces between the clutch disk ring 1024 and the retainer ring 1054.

When the pyrotechnical drive 1012 is activated and the pawl 1016 is in its engaged position, the driven gear 1014 starts rotating in driving direction D with a far higher rotational velocity than when driven by the reversible drive 1004.

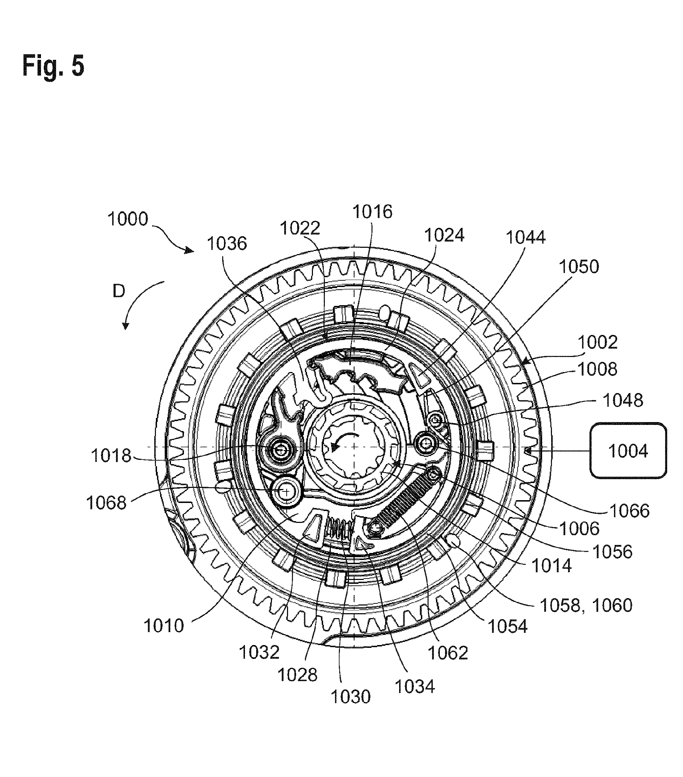

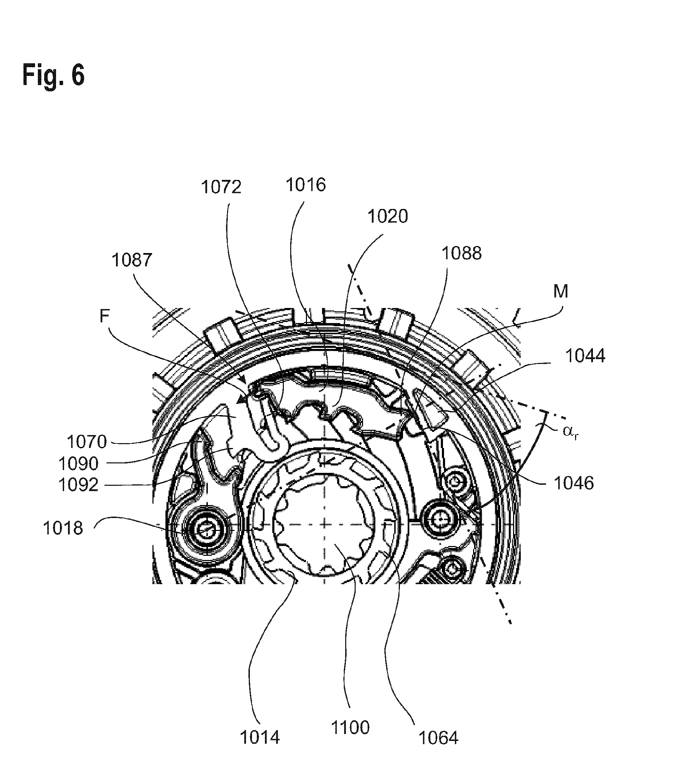

As a result, the teeth 1064 of the driven gear 1014 act on the teeth 1020 of the pawl 1016 and transmit a high kinetic energy to the pawl 1016. The pawl 1016 is accelerated radially outwards into a decoupled position, as shown in Figures 5 and 6. In the decoupled position, the pawl 1016 is unable to engage the driven gear 1014 again, even if the reversible drive 1004 rotates the driving element 1002 in driving direction D.

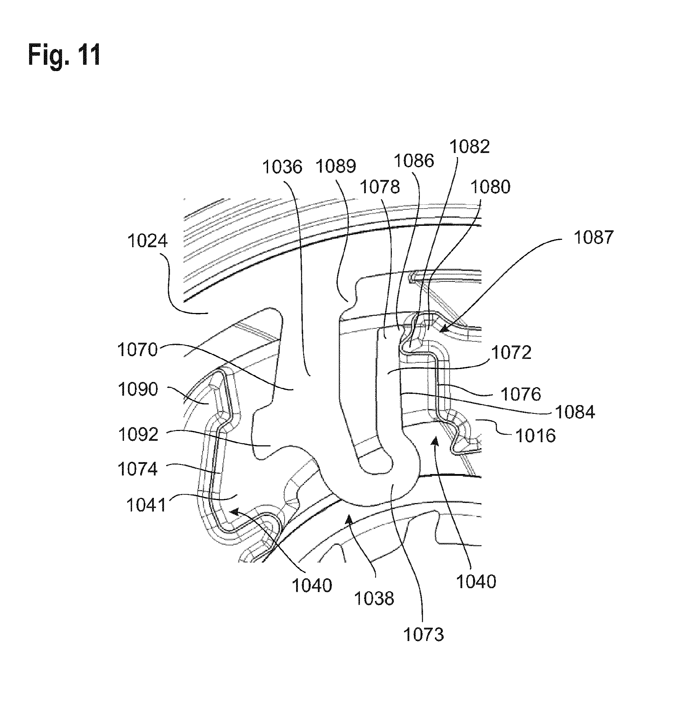

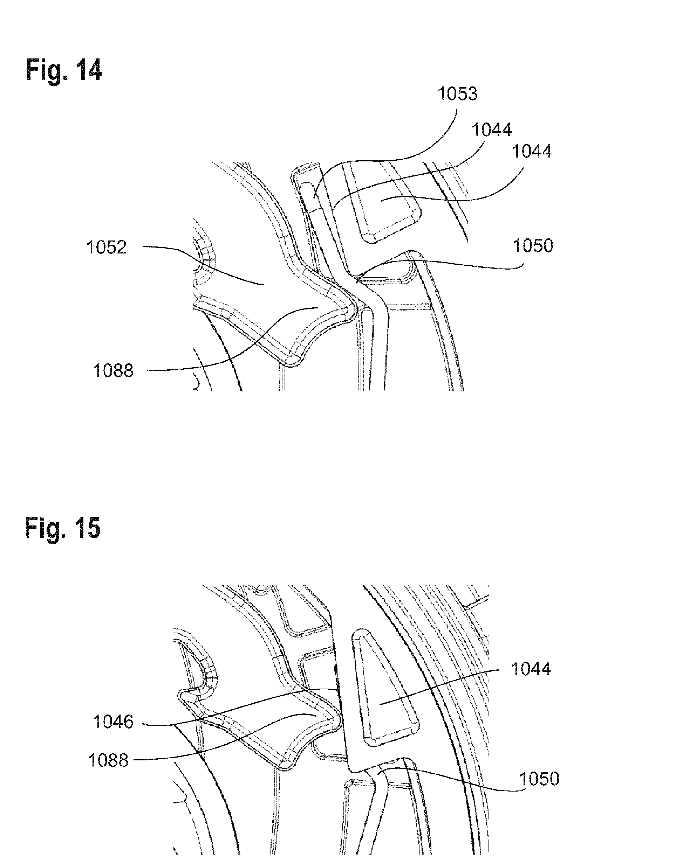

The transfer of the pawl 1016 from the engaged position into the decoupled position is now described in more detail with regard to Figures 11 to 15.

The clutch disk arm 1036 in this embodiment is hook shaped. The hook is formed by a rigid leg 1070 connected to the clutch disk ring 1024 and extending inwards into the opening 1026 and a flexible, free leg 1072 connected to the end of the leg 1070 and extending outwards towards the clutch disk ring 1024. The legs 1070, 1072 are connected by a U-shaped connecting portion 1073 so that in an unstressed state the legs 1070, 1072 are essentially parallel to each other. The flexible leg 1072 ends in a free end 1078 positioned on the far side from the pivot axis 1018.

The guiding geometry 1038 on the clutch disk arm 1036 is essentially formed on the circumferentially outer sides of the legs 1070, 1072.

The guiding geometry 1040 of the pawl 1016 is formed as an axial recess 1041 in the pawl surface that is delimited by a left side guiding faces 1074 and a right side guiding face 1076 that interact with the legs 1070, 1072 of the clutch disk arm 1036.

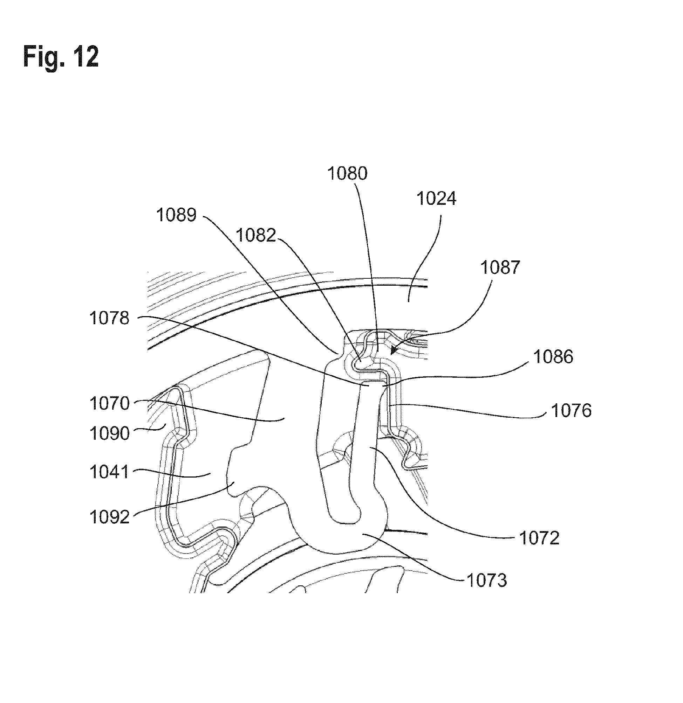

Figure 11 shows the clutch disk arm 1036 and the pawl 1016 in between the neutral and the engaged position. Figure 12 shows the situation for the decoupled position.

As the pawl 1016 is accelerated radially outwards by the driven gear 1014, the pawl 1016 pushes against the flexible leg 1072 of the clutch disk arm 1036 in circumferential direction, while sliding radially outwards along the flexible leg 1072. However, the pawl 1016 has attained so high a kinetic energy that the flexible leg 1072 is deflected in circumferential direction towards the rigid leg 1070 during the motion of the pawl 1016.

The right side guiding face 1076 of the pawl 1016 has a protrusion 1080 directed towards the flexible leg 1072 of the clutch disk arm 1036 in circumferential direction U. The tip of the protrusion 1080 forms a nose 1082 extending along the circumferential direction towards the flexible leg 1072.

On the flexible leg 1072 a runway 1084 is formed that extends on the right side of the flexible leg 1072 (in the Figures) up to a free end 1078 of the flexible leg 1072 and that ends in a nose 1086.

The nose 1082 of the pawl 1016 slides along the runway 1084 all the way to the free end 1078 of the flexible leg 1072. The flexible leg 1072 is deflected maximally when the noses 1082, 1086 pass along each other, just when the nose 1082 approaches the free end 1078.

The nose 1082 on the pawl 1016 then moves radially outwards beyond the free end 1078 of the flexible leg 1072. The deflected free end 1078 snaps back into its normal position due to its elasticity, when the guiding geometry 1040 of the pawl has passed. This situation is shown in Figure 12.

The free end 1078 of the flexible leg 1072 is now positioned radially inwards of the protrusion 1080 of the pawl 1016 and hinders the pawl 1016 from pivoting radially inwards again.

The free end 1078 of the clutch disk arm 1036 and the protrusion 1080 on the right side guiding face 1076 of the pawl 1016 together from a latching connection 1087 that is closed when the free end 1078 of the flexible leg 1072 snaps below the projection 1080 on the pawl 1016.

The latching connection 1087 is situated roughly in the middle of the pawl 1016 with regard to the extension of the pawl 1016 from the pawl pivot axis 1018 to the free end 1052 of the pawl 1016.

The pawl 1016 gets into this position relative to the clutch disk arm 1036 in which the latching connection 1087 closes, when pivoting radially outwards, because in the engaged position (see Figure 4) the flexible leg 1072 of the clutch disk arm 1036 is located immediately adjacent to the projection 1080 of the pawl 1016, as the flexible leg 1072 has been used to push the pawl 1016 into the engaged position. When the pawl 1016 pivots outwards from the engaged position, protrusion 1080 comes into contact with the flexible leg 1072 and slides along the flexible leg 1072 radially outwards. During this motion, the pawl 1016 also pushes against the clutch disk arm 1036 and the whole clutch disk element 1022 is rotated in driving direction D. The clutch disk arm 1036 is deformed in driving direction D.

The free end 1052 of the pawl 1016, meanwhile, comes first into contact with the pawl end stop 1050 provided on the spring element 1048, when the pawl 1016 is accelerated radially outwards by the driven gear 1014. However, the flexibility of the spring element 1048 is chosen such that the kinetic energy of the pawl 1016 is high enough to deform the pawl end stop 1050 and move radially outwards beyond its normal neutral position.

Because of this movement, a pointed tip 1088 on the free end 1052 of the pawl 1016 slides along the spring element 1048 beyond the pawl end stop 1050 and comes into contact with the contact section 1053 of the spring element 1048. A clamping force acting on the pawl 1016 results, providing a second locking force acting on the pawl 1016 to keep the pawl 1016 in the decoupled position. However, usually this second locking force is weaker than the retaining force provided by the latching connection 1087.

These two locking mechanisms, namely the latching connection 1087 and the clamping connection between the pawl 1016 and the spring element 1048, block the pawl 1016 from being pivoted by the driving element 1002 rotating in driving direction D and prevent the pawl 1016 from engaging the driven gear 1014 again. Additionally, both locking mechanisms also serve to secure the pawl 1016 against external forces that would act on the pawl 1016.

Rotational forces in driving direction D are transmitted to the clutch disk ring 1024 by the protrusion 1080 on the pawl 1016 lying against a corresponding structure 1089 on the clutch disk arm 1036 arranged directly radially inwards of the inner surface of the clutch disk ring 1024 (see Fig. 11). This geometry ensures that the transmitted force acts mainly in tangential direction, therefore introducing only minimal frictional forces between the outer surface of the clutch disk ring 1024 and the inner surface of the retainer ring 1054 when the clutch disk ring 1024 is pushed by the pawl 1016, when the reversible drive 1004 is still active in the decoupled position. Further, when the reversible drive 1004 is activated in driving direction D and the clutch 1000 is in the decoupled position, no radially inwards directed force component acts on the pawl1016, so that it is not possible to pivot the pawl 1016 radially inwards into the engaged position by rotating the driving element 1002 in driving direction D. Instead, the clutch disk ring1024 rotates together with the driving element 1002 in diving direction D.

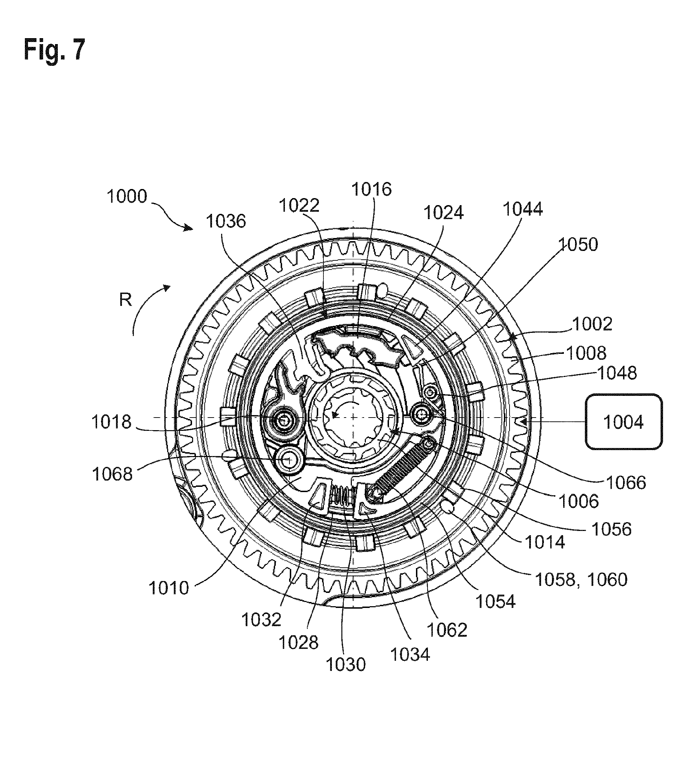

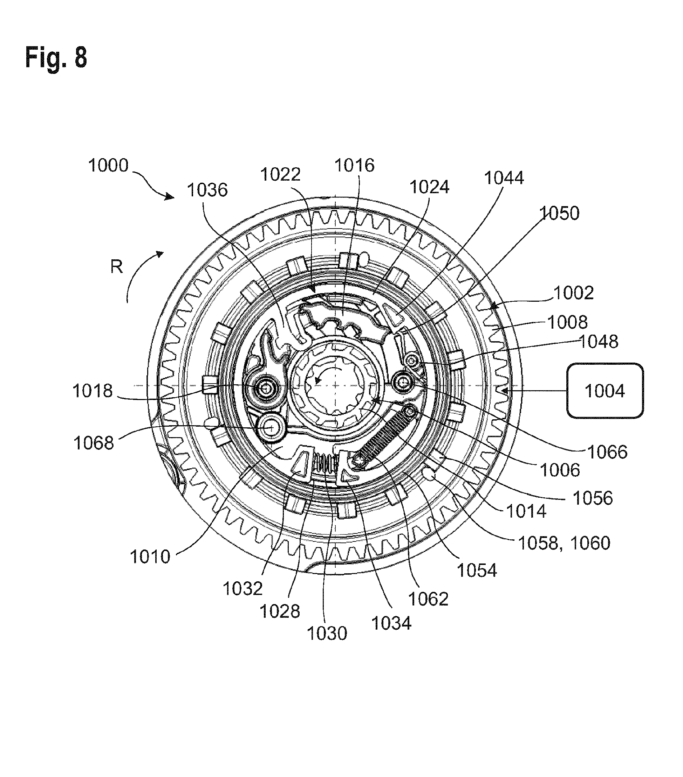

The movement of the pawl 1016 from the decoupled position back into the neutral position is shown in Figures 7 and 8.

To transfer the clutch 1000 and the pawl 1016 from the decoupled position back into the neutral position, a release mechanism is provided that comprises the reversible drive 1004 rotating in releasing direction R cooperating with the pawl 1016 and a ramp structure 1044. The reversible drive 1004 is in this example activated in a short pulse only. A longer operation of the reversible drive 1004 in releasing direction R might be also feasible. Also, the reversible drive 1004 could be operated in several, consecutive short pulses to transfer the clutch 1000 back into the neutral position.

First, the pawl tip 1088 comes into contact with a contact surface 1046 of the ramp structure 1044 of the clutch disk ring 1024 and starts to rotate the clutch disk element 1022 in releasing direction R. The retainer ring 1054 is entrained with the clutch disk element 1022 over the distance between two adjacent spokes 1056 until the stopping pins 1060 again come into contact with the spokes 1056. The release pulse still continues at this time.

As the rotational movement of the retainer ring 1054 is stopped, the clutch disk element 1022 lags behind the rotation of the driving element 1002 and the pawl 1016, due to the frictional force between the retainer ring 1054 and the clutch disk ring 1024.

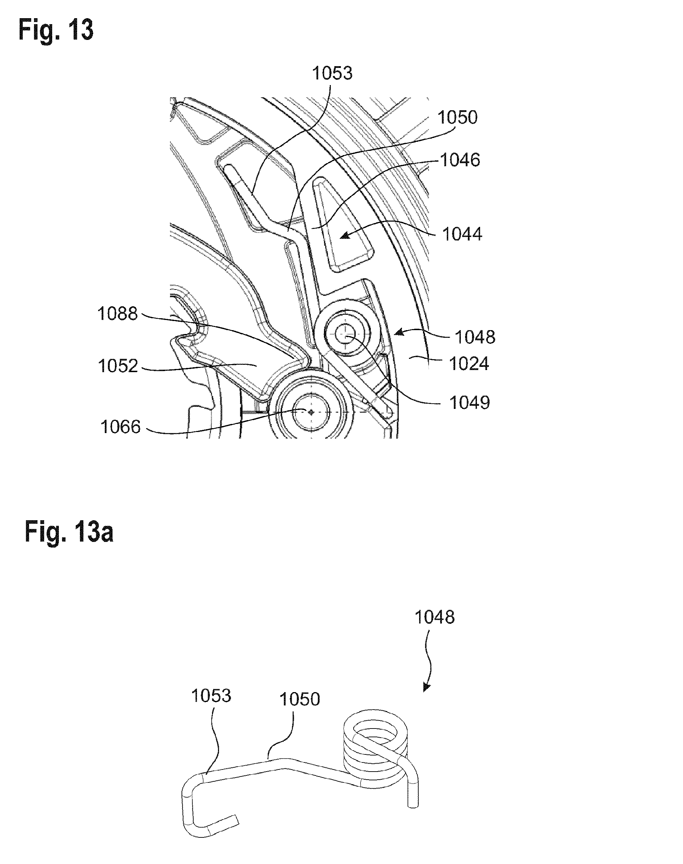

The contact of the pawl tip 1088 on the free end 1052 of the pawl 1016 with the contact face 1046 on the ramp structure 1044 occurs approximately at a mid-point M of the extension of the contact face 1046 into the opening 1026. The distance of the ramp structure 1044 to the pivot axis 1018 is chosen such that the pawl 1016 is clamped at the contact face 1046 (see Figs. 13 - 15).

The free end 1052 of the pawl 1016 is blocked by the ramp structure 1044, so that the pawl 1016 is pushed further against the ramp structure 1044.

In this position, an imaginary connection line between the pivot axis 1018 and the projection 1088 at the free pawl end 1052 is appropriately normal to the contact face 1046 at the mid-point M of the contact face (see Fig. 6). Therefore, the force transmitted from the driving element 1002 via the pivot axis 1018 to the free end 1052 of the pawl 1016 acts essentially normally on the contact face 1046 and the pawl 1016 is less subjective to external forces attempting to swivel the pawl 1016 inwards.

Nonetheless, during the pulse in release direction R, the rotation of the driving element 1002 is sufficient to push the free end 1052 of the pawl 1016 a short distance radially inwards along the contact face 1046 (to the right in Figure 6). The clutch disk element 1022 is kept stationary during this release pulse due to its frictional coupling to the retainer ring 1054.

The release pulse, i.e. the short rotation of the driving element 1002 in release direction R, moves the free end 1052 of the pawl 1016 along the contact face 1046, so that the angle αᵣ between the free pawl end 1052 and the pivot axis 1018 and the contact face 1046 changes and becomes more obtuse (regarded in radially inward direction), making it easier to push the pawl end 1052 along the contact face 1046. Release pulses may be repeated several times, if necessary, until the pawl 1016 loses contact with the contact face 1046. Else, a continuous operation of the reversible drive 1004 may continue until the pawl 1016 is free from the ramp structure 1044.

At this moment, the spring element 1048 snaps back into its neutral position and pushes the pawl 1016 in the neutral position where the free end 1052 of the pawl 1016 lies against the pawl end stop 1050 of the spring element 1048 (see Fig. 1).

Once the pawl 1016 loses contact with the ramp structure 1044, the driving element 1002 and, therefore the pawl 1016, rotate relative to the clutch element 1022, which causes the latching connection 1087 to open. Further movement in release direction R brings the rigid leg 1070 of the clutch disk arm 1036 into contact with the guiding face 1074 of the guiding geometry 1040 of the pawl 1016.

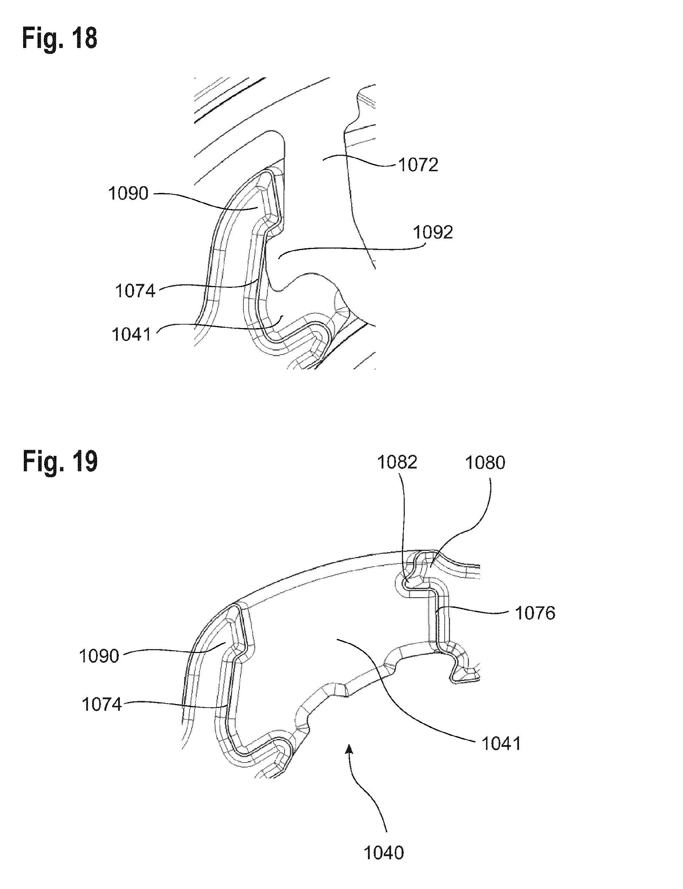

The guiding face 1074 is provided with a protrusion 1090 at its radially outer end, directed along the circumferential direction facing the leg 1070 of the clutch disk arm 1036. The leg 1070 has a corresponding protrusion 1092 that is arranged radially inwards of the protrusion 1090. In the neutral position protrusions 1090, 1092 are in contact which results in the pawl 1016 being locked against involuntary movement radially inwards and therefore into the engaged position (see also Figs. 18 and 19).

These kinds of movements may occur during a crash situation when the reversible drive is inactive and the clutch 1000 is not supposed to be engaged. However, due to the interaction of the protrusions 1090, 1092, the clutch 1000 is secured against unintentional engagement.

In the embodiment described above, the ramp structure 1044 is a rigid structure, and the contact face 1046 is flat.

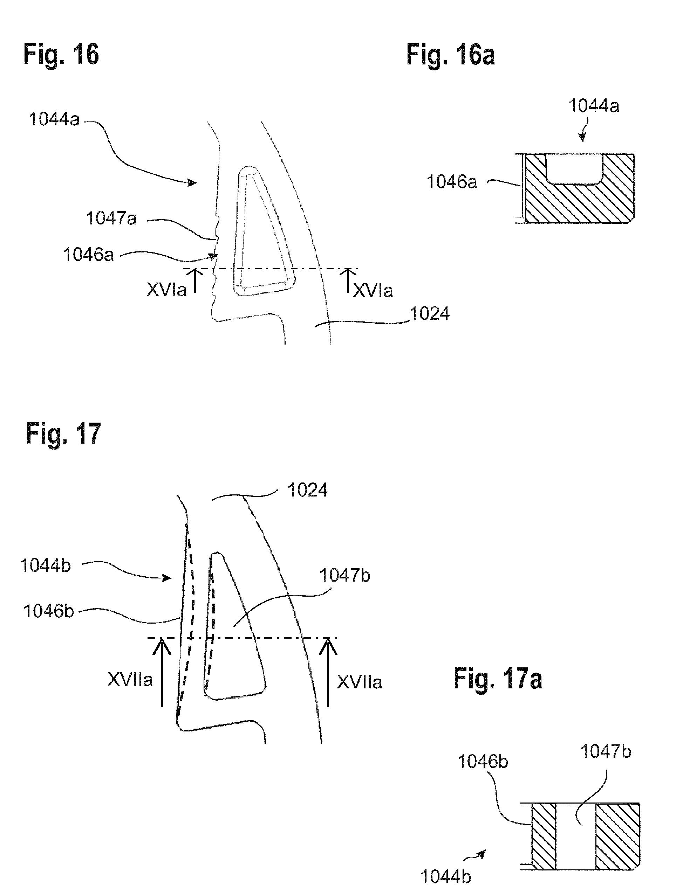

Figures 16, 16a and 17, 17a show two alternative embodiments of the ramp structure 1044.

In Figure 16, the ramp structure 1044a is also a rigid extension of the clutch disk ring 1024 and formed integrally therewith, as in the previously described embodiment. Figure 16a shows a sectional view of the ramp structure 1044a.

However, the contact face 1046a of the ramp structure 1044a is structured and has a profile 1047a with a succession of recesses and protrusion along the contact face 1046a. In this example the profile 1047a is a saw tooth profile that allows sliding of the pointed tip 1088 of the pawl 1016 along the contact face 1046a in the radially inward direction, but hinders the pawl 1016 from moving again radially outwards between release pulses.

Figures 17 and 17a show a second alternative embodiment for the ramp structure 1044b. The contact face 1046b is flat as in the first embodiment, however, the ramp structure 1044b is in itself flexible so that the contact face 1046b is deformed by the pointed tip 1088 on the pawl 1016, increasing the clamping effect.

In this example, a hollow recess 1047b is provided between the contact face 1046b and the clutch disk ring 1024 that allows deformation of the contact face 1046 (see also sectional view in Figure 17a).

The features of the embodiments of Figure 16 and Figure 17 could also be combined in a ramp structure having a profile 1047a and a hollow recess 1047b.

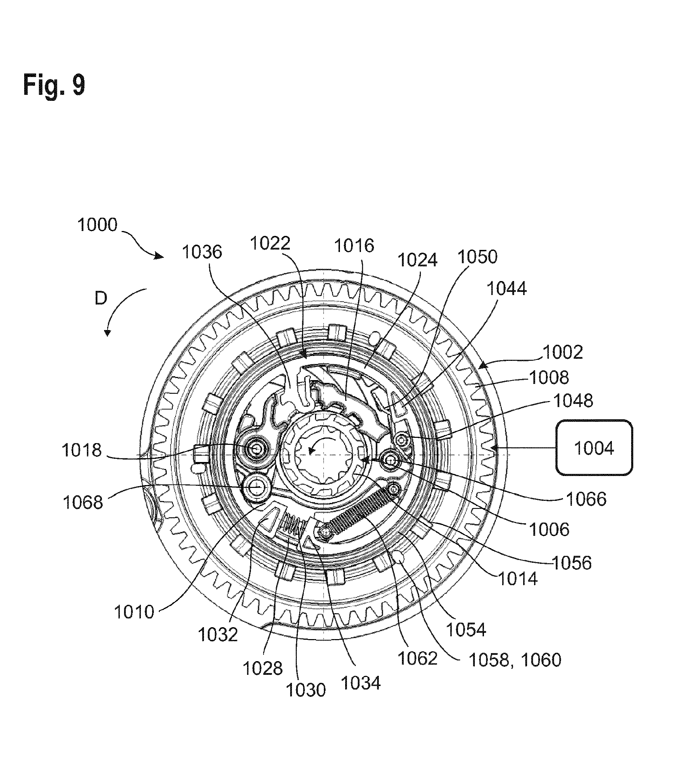

Under certain conditions during the engagement procedure, as the pawl 1016 moves from the neutral position to the engaged position, a situation can occur where the teeth 1020 of the pawl 1016 meet with the tips of the teeth 1064 of the driven gear 1014, instead of correctly meshing with the teeth 1064. In this case, only the tip 1098 of one of the teeth 1020 of the pawl 1016 hooks behind the tip 1096d of a tooth 1064 of the driven gear 1014. However, as force is transmitted from the reversible drive 1004 to the pawl 1016, the pawl 1016 and the driven gear 1014 initially stay in engagement, and the driven gear 1014 is rotated in driving direction D. This situation that is also called a tip-to-tip situation is shown in Figure 9.

When a certain load limit is surpassed, however, the pawl 1016 slips from the teeth 1064 of the driven gear 1014 and is deflected by the driven gear 1014 into the decoupled position shown in Figures 5 and 6.

It is possible to detect that the pawl 1016 has lost its engagement with the driven gear 1014 in the tip-to-tip situation by a motor control unit (not shown), as the reversible drive 1004 will be running without load when the pawl 1016 loses contact with the driven gear 1014.

In this case, the reversible drive 1004 can be stopped and rotated in release direction R to return the clutch 1000 from the decoupled position into the neutral position as described above. From the neutral position the clutch 1000 can be reengaged.

The most critical part of the engagement process with regard to the occurrence of a tip-to- tip situation is a situation in which the tip 1098a of the most radially inward tooth 1020a of the pawl 1016 is already radially below the tips 1096d of the teeth 1064 of the driven gear 1014 and then moves radially outward again, as in this case the tip 1098a of the tooth 1020a of the pawl 1016 can hook behind a tooth 1064 of the driven gear 1014 near its tip 1096d so that the pawl 1016 is caught on the driven gear 1014, but not yet in the correct engaged position. Once this tip-to-tip position is assumed, the pawl 1016 will not move further into the correct engagement position.

The motion of the pawl 1016 inward into the engaged position and, thereby, the possibility to avoid a tip-to-tip situation, is influenced greatly by the shape and the interaction of the guiding geometries 1038, 1040 on the pawl 1016 and on the clutch disk arm 1036. For instance, It has been found that the occurrence of a tip-to-tip situation will be significantly reduced when the critical radially outward movement of the pawl 1016 can be prevented, e.g. by moving the tip 1098a of the tooth 1020a of the pawl 1016 continuously inward so that the tips 1098a, 1096d of the teeth 1020a, 1064 cannot catch on each other. More details will be discussed below.

In the case that neither the pyrotechnical drive 1012 is activated nor a tip-to-tip engagement occurs and the clutch 1000 is engaged normally, the clutch 1000 can be released back into the neutral position by rotating the reversible drive 1004 in the release direction R.

When the driving element 1002 stops rotating in driving direction D, the driven gear 1014 also stops its rotation. Then the rotating direction of the reversible drive 1004 is reversed, the driving element 1002 now turning in release direction R. The pawl 1016 rotates together with the driving element 1002 relative to the clutch disk element 1022, until protrusion 1090 of the pawl 1016 comes into contact with protrusion 1092 of the clutch disk arm 1036. Both protrusions 1090, 1092 have faces inclined against the circumferential direction, so that a force component radial outwards ensues. Entrained by the clutch disk element 1022, the retainer ring 1054 rotates until the spokes 1056 come into contact with the stopping pins 1060. From this moment on, the clutch disk element 1022 and, therefore, also the clutch disk arm 1036 is arrested with regard to the rotating driving element 1002, and guiding face 1074 of the guiding geometry 1040 of the pawl 1016 starts sliding radially outwards along the rigid leg 1070 of the clutch disk arm 1036. The pawl 1016 is pivoted radially outwards and loses its engagement with the driven gear 1014. As the pawl 1016 does not receive an exceedingly high kinetic energy, the motion of the pawl 1016 is stopped by the pawl end stop 1050 of the spring element 1048 in the neutral position.

At the discretion of a person skilled in the art, all of the described features can be applied to any of the clutch embodiments discussed in this application alone or in a suitable combination.

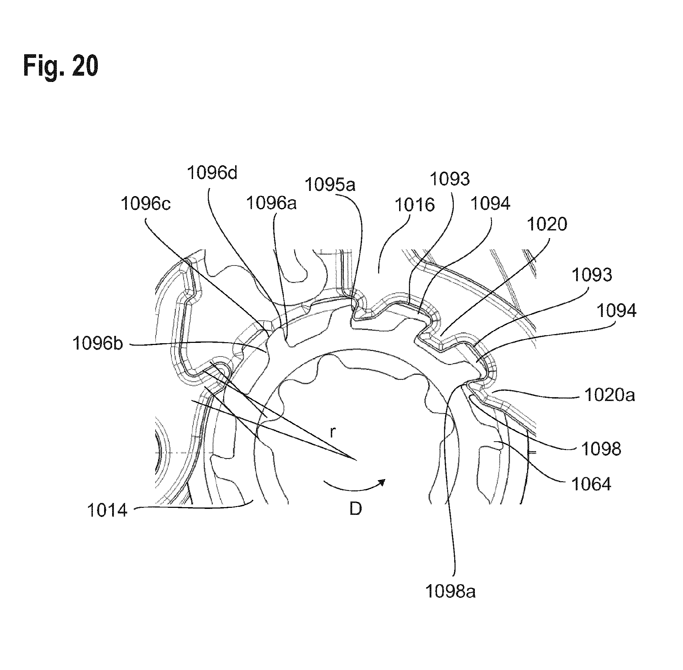

Details of the toothing 1020, 1064 of the pawl 1016 and the driven gear 1014 are shown in Figures 20 to 24.

Figure 20 shows the clutch 1000 in the engaged position where the teeth 1020 of the pawl 1016 are in engagement with the teeth 1064 of the driven gear 1014 and the pawl 1016 entrains the driven gear 1014 in driving direction D.

Between the teeth 1020 of the pawl 1016 recesses 1093 are provided so that in the engaged position a gap 1094 remains between the radial outer end of the teeth 1064 of the driven gear 1014 and the pawl 1016.

Should the belt spool be moved linearly by a sudden impulse not caused by one of the drives 1004, 1012, for instance induced by the sudden movement of the snake at the start of the activation of the pyrotechnical drive 1012, teeth 1064 of the driven gear 1014 cannot interact with the pawl 1016 and accelerate the pawl 1016 radially outwards.

The first tooth 1020a of the pawl 1016 that comes into engagement with the teeth 1064 of the driven gear 1014 is the first tooth arranged adjacent to the free end 1052 of the pawl 1016, i.e. the tooth of the pawl 1016 that is swiveled the most and the fastest inward.

Contact between the pawl 1016 and driven gear 1014 is between the flanks 1095a of the teeth 1020 of the pawl 1016 directed in driving direction D and flanks 1096a of the driven gear 1014 directed against the driving direction D.

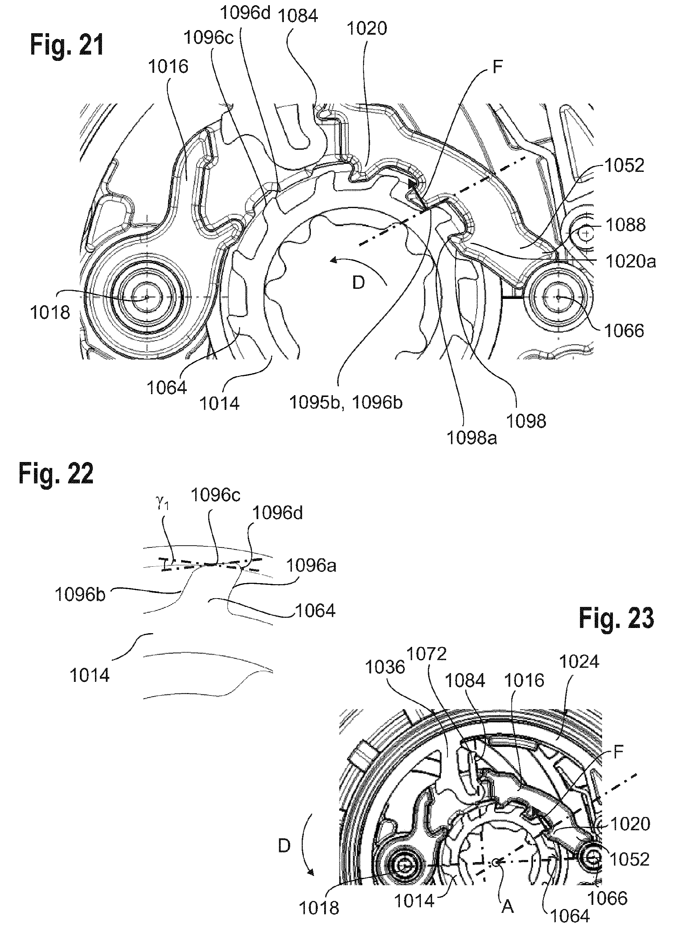

Near the root of the tooth, the flank 1096b has is relatively steep. However, in a flank section 1096c directly adjacent to the tip 1096d of the tooth, the angle Y₁ (see Fig. 22) is reduced to a value between ca. 10° to 25° with regard to the tangential direction at the tip 1096d of the tooth 1064.

Figure 21 shows the situation when the pyrotechnic drive 1012 starts to accelerate the seat belt spool and the driven gear 1014 coupled therewith. The rotational speed of the driven gear 1014 now exceeds the rotational velocity of the pawl 1016. In this case, the right hand flanks 1096b of the teeth 1064 of the driven gear 1014 come into contact with the left hand flanks 1095b of the teeth 1020 of the pawl 1016. Both flanks 1095b, 1096b are angled such that the force F imparted to the pawl 1016 by the driven gear 1014 acts mainly in a tangential direction to the pivot axis 1018 (see for instance Figure 21). Therefore, the pawl 1016 is pivoted outward with an optimal force vector.

In this embodiment the pawl 1016 has three teeth 1020.

The middle tooth is relatively wide and long, to keep the precise distance from the driven gear 1014 and ensure a precise meshing of the toothings of the driven gear 1014 and the pawl 1016.

The maximal kinetic energy will be transferred from the driven gear 1014 to the pawl 1016, when the seat belt spool is at its peak acceleration. However, the seat belt spool needs a certain time to reach this peak acceleration. During this time, an optimal overlap of the toothings should be achieved to establish the contact in the desired manner. The seat belt spool reaches its acceleration peak in an abrupt manner. Therefore, distance and overlap of the toothings need to be adjusted precisely to ensure a reliable decoupling and an optimal transfer of kinetic energy in every situation.

For instance, if the distance is too short, the seat belt spool is still accelerating and the kinetic energy is less than maximal. If the distance is too large, the pawl 1016 moves out before a defined contact is established, because of the impulse of the pawl 1016, and, again, the transferred kinetic energy is less than maximal. If the overlap is too small, the pawl moves out before the contact with the seat belt spool is optimal. If the overlap is too large, than the pawl 1016 might be meshing already too much with the driven gear 1014 to reliably decouple.

The clutch 1000 has several features that reduce the occurrence of a tip-to-tip situation during the engagement of the clutch.

As a first measure, the guiding geometries 1038, 1040 of the clutch disk arm 1036 and of the pawl 1016 are configured so that the pawl 1016 is pivoted continuously radially inward by the interaction of the guiding geometries 1038, 1040.

In the first embodiment, the runway 1084 on the flexible leg 1072 of the clutch disk arm 1036 extends in an angle α ("runway angle") radially inward that lies between 80° and 120°, in particular about 84°, measured when the pawl 1016 is in its engaged position, relative to an imaginary straight line extending through the pawl pivot axis 1018 and the center of the pawl end stop 1066 (see e.g. Figure 4). In particular

In the position where the pawl 1016 first comes into contact with the runway 1084 during engagement of the clutch, the runway 1084 extends in approximately the same runway angle α as in the engaged position, with regard to an imaginary line between the pawl pivot axis 1018 and a projection 1066p of the center of the pawl end stop 1066 rotated on its radius into contact with the pawl end 1052, as is depicted in Figure 3.. A higher initial runway angle α requires less rotation of the pawl 1016 until engagement.

In certain constellations between the positions of the tooth 1020a of the pawl 1016 and the teeth 1064 of the driven gear 1014, the flexible leg 1072 may be slightly deflected in the circumferential direction, so that the angle α may increase during the last step of the engagement process.

When the tooth 1020a of the pawl 1016 moves directly into a gap between two adjacent teeth 1064 of the driven gear 1014, the pawl 1016 moves inwards along the shortest possible path. In this case, the tooth 1020a of the pawl 1016 smoothly meshes with the teeth 1064 of the driven gear 1014, and the engagement is completed correctly. The path of the tip 1098a of the tooth 1020a of the pawl 1016 is always a superposition of the inward pivoting motion around the pawl pivot axis 1018 and of the rotation around the rotation axis A of the driving element 1002.

However, when the tooth 1020a of the pawl 1016 meets with one of the teeth 1064 of the driven gear 1014 during the inward motion, the pawl 1016 encounters a resistance as the driven gear 1014 is blocked by the seat belt retractor 120 against turning in the releasing direction R so that it cannot evade the pressure exerted by the pawl 1016. At the same time, the driving element 1002 continues its rotation in the driving direction D. As a result, a force is applied by the pawl 1016 to the flexible leg 1072, and the flexible leg 1072 is deflected in the driving direction D, because the frictional forces are greater than the flexibility of the leg 1072. Accordingly, the runway angle α increases and the pawl 1016 is securely guided along the top of the tooth 1064 of the driven gear 1014, i.e. over the tip 1096d and along the section of the flank 1096c, and into the gap adjacent the tooth 1064 of the driven gear 1014 in driving direction D, without the pawl 1016 being moved radially outward again.

Figure 22 shows a close-up view of one of the teeth 1064 of the driven gear 1014. The left-hand flank 1096b has an elliptical shape toward the tip of the tooth 1064, while near the actual tip of the tooth the tooth flank 1096b runs in an upward angle. In general, both tooth flanks 1096a, 1096b are inclined away from the radial direction r against the driving direction D. The left hand flank 1096b is more inclined than the right hand flank 1096a (see also Fig. 20).

A further feature that helps to prevent a tip-to-tip occurrence is that the flank 1096c is slightly inclined in the driving direction D, i.e. an end point of the flank 1096c lying in front in the driving direction D lies radially below an end point of the flank 1096c following behind in the driving direction D. This helps the tooth 1020a of the pawl 1016 to slide along the top of the tooth 1064 of the driven gear 1014 in the driving direction D and to pass this tooth 1064 without hooking behind it.

Also helping to prevent a tip-to-tip situation are the shape and orientation of a trailing face 1098 adjacent to a tip 1098a of the first tooth 1020a of the pawl 1016 nearest to the free end 1052 (see also Fig. 24). The face 1098 is arc shaped and slightly concave in the direction towards the driven gear 1014. Also, the face 1098 is slightly inclined away from the driving direction D so that a tip 1098a of the tooth 1020a at one end point of the face 1098 lies farther radially inward than an end point of the face 1098 following behind in driving direction D. The angle Y₂ between the face 1098 and a tangent at the tip 1098a of the first tooth 1020 can be approximately equal to the angle Y₁. With this configuration, the face 1098 forms a flank on the tooth 1020a hat is inclined in the opposite direction than the flank 1096c of the tooth 1064 of the driven gear 1064. Therefore, no pressure will build when the tooth 1020a of the pawl 1016 should contact the tooth 1064 of the driven gear 1014 during the engagement process. Instead, the tip 1098a of the tooth 1020a slides along the top of the tooth 1064 and is guided into the next gap between teeth 1064 of the driven gear 1014 into the correct engaged position. As the pawl 1016 is continuously and quickly moved radially inward, the next contact of the tooth 1020a of the pawl 1016 with a tooth 1064 of the driven gear 1014 will occur well below the tip 1096d of the tooth 1064 of the driven gear 1014 so that the pawl 1016 will come into correct engagement with the driven element 1006.

Figures 25 to 28c show details of the clutch 1000 related to the entrainment of the clutch disk element 1022 by the driving element 1002 in driving direction D and in releasing direction D.

As described above, during the engagement motion, while the reversible drive 1004 rotates in driving direction D, the clutch disk stop 1068 comes into abutment against a load transfer structure on the clutch disk element 1022, in particular in this example on the radially extending face 1069 on the first, left hand circumferential end 1032 of the clutch disk ring 1024 (in the figures).

During engagement, the nose 1082 on the end of the protrusion 1080 of the guide geometry 1040 of the pawl 1016 pushes against the flexible leg 1072 of the clutch disk arm 1036. The clutch disk element 1022 is pushed along in driving direction D by a force F₁. The force F1 is essentially directed tangentially. During this movement, the nose 1082 slides radially inwards along the runway 1084 on the right hand side of the flexible leg 1072 while the pawl 1016 is swiveled radially inwards.

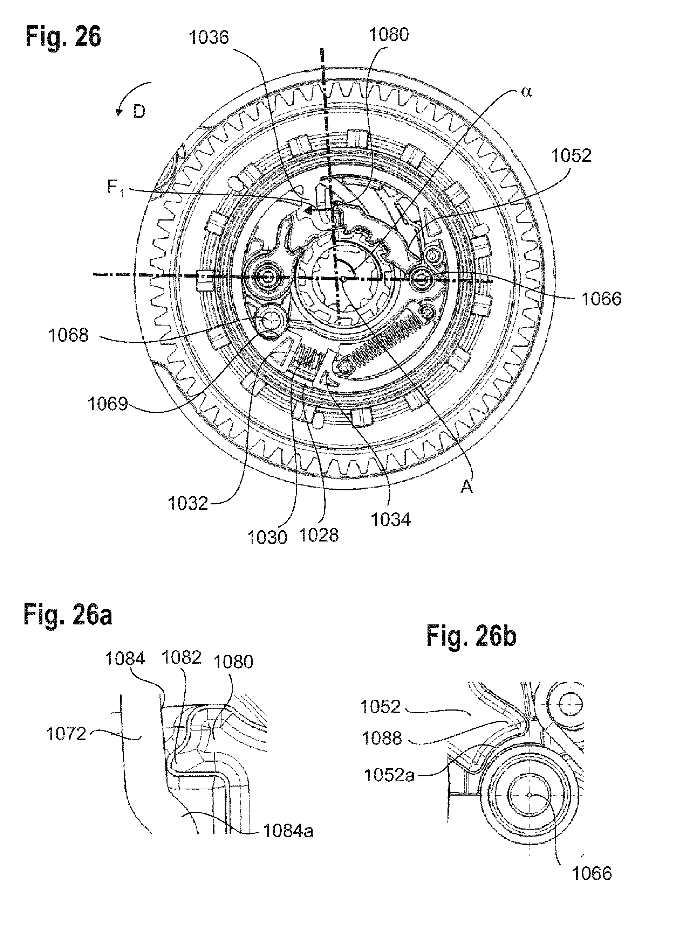

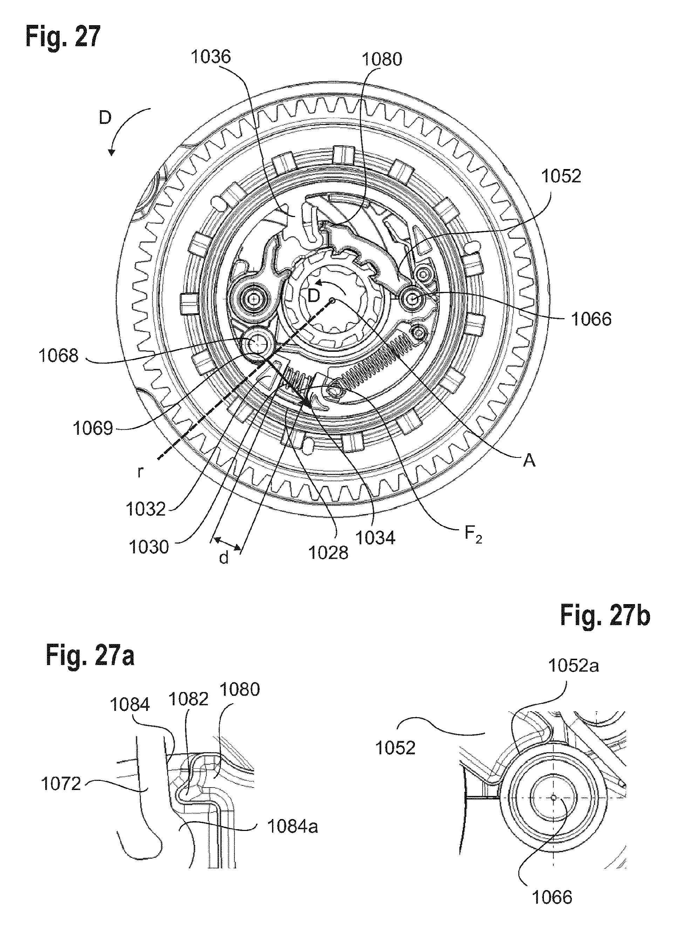

Figs. 26, 26a and 26b show the clutch 1000 in a position shortly before complete engagement is reached. The nose 1080 is still positioned on a straight portion of the runway 1084, a small distance radially outwards of a circumferential bulge 1084a directly above the U-shape that connects the legs 1070, 1072 (see also Fig. 27a).

At the same time the free end 1052 of the pawl 1016 is still slightly distanced from the pawl stop 1066 (see Fig. 26b).

Figs. 27, 27a and 27b show the clutch 1000 in the completely engaged position.

The nose 1082 abuts on the circumferential bulge 1084a. A concave face 1052a on the free end 1052 of the pawl 1016 is in contact with the curved outer surface of the pawl end stop 1066 so that a force transfer to the driven gear 1014 is supported by the pawl end stop 1066.

At the same time, the clutch disk stop 1068 on the driving element disk 1010 comes to lie against the face 1069. As the face 1069 runs in radial direction, the force F₂ transmitting from the driving element 1002 to the clutch disk element 1022 is directed tangentially to an imaginary radius between the contact point of the clutch disk stop 1068 with the face 1069 and the common rotation axis A and, therefore, also tangential to the outer circumference of the clutch disk ring 1024 radially outwards of this contact point (see e.g. Fig. 27).

Due to the contact point at the first circumferential end 1032 of the clutch disk ring 1024, the force F₂ slightly compresses the expansion spring 1030 so that the circumferential length d of the gap 1028 is shortened. Thereby, the frictional force between the clutch disk ring 1024 and the retainer ring 1054 surrounding the clutch disk ring 1024 and, therefore, the wear on the clutch disk element 1022 and on the retainer ring 1054 is reduced.

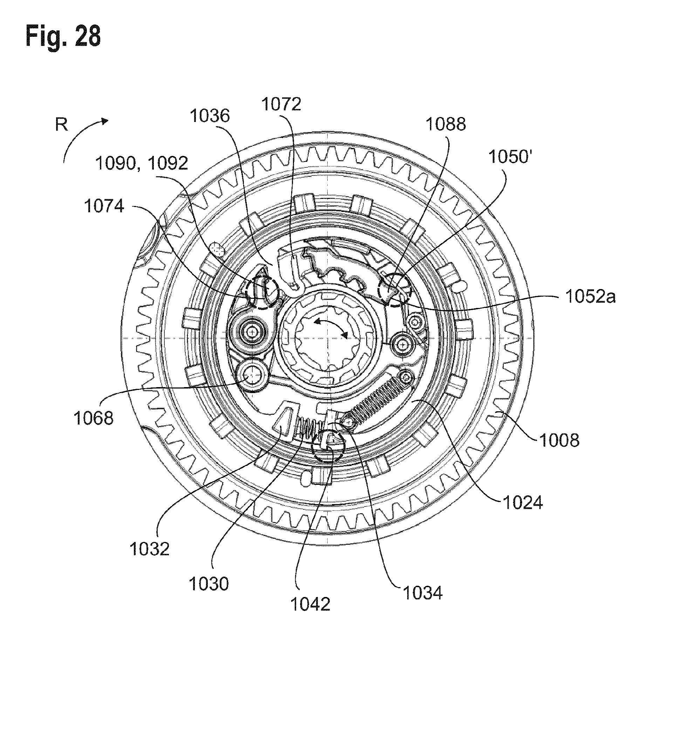

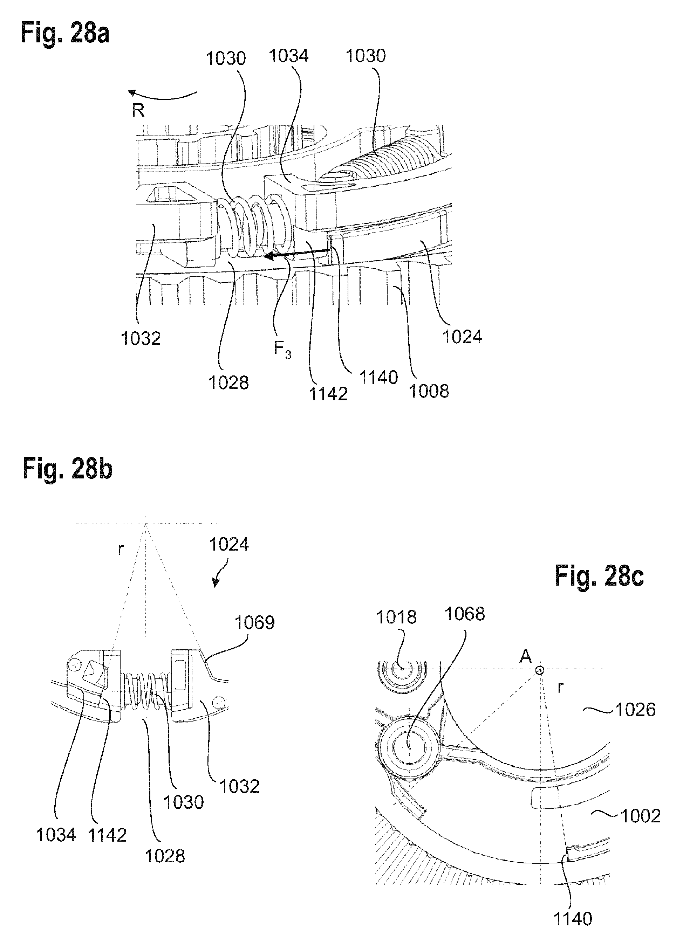

Figure 28 and 28a to 28c show the clutch 1000' in the neutral position. Figure 28b shows the underside of a section of the clutch disk ring 1024.

To transfer the clutch 1000' back into the neutral position, either from the engaged position or from the decoupled position, the reversible drive 1004 rotates the driving element 1002 in releasing direction R. At first, the clutch disk element 1022 is retained by the retainer ring 1054 due to their friction coupling (as soon as the retainer ring 1054 has rotated from the distance between two of its spokes 1056). Therefore, the left side guiding face 1074 with its protrusion 1092 moves into contact with the left side rigid leg 1070 of the clutch disk arm 1036, while the free end 1052 of the pawl 1016 moves back towards the pawl end stop 1050' of the spring element 1048' as described above.

At the same time, the clutch disk stop 1068 rotates away from the face 1069 of the clutch disk ring 1024. Due to the relative rotation between the clutch disk ring 1024 and the driving element 1002, pawl 1016 moves radially outwards and contacts the spring element 1050. The spring element 1050 is designed to be weaker than the frictional forces between the clutch disk element 1022 and the retainer ring 1054. Therefore, the pawl 1016 moves further radially outwards and deforms the spring element 1050, until a radially extending face of a second clutch disk stop 1140, here an axial step provided on the driving element disk 1010, comes into abutment on a radially extending face of a second load transfer structure 1142 on the right hand side of the second circumferential end 1034 of the clutch disk ring 1024. Both circumferential faces extend in radial direction and lie against each other, so that the force F₃ transmitted from the driving element 1002 to the clutch disk ring 1024 is tangentially directed. As during the rotation in driving direction D, the transmitted force F₃ can lead to a slight compression of the expansion spring 1030 and, therefore, to a friction reduction between the clutch disk ring 1024 and the retainer ring 1054.

In the neutral position the clutch disk element 1022 and the driving element 1002 are in contact in rotational direction at three points, namely the protrusions 1090, 1092 of the guiding geometries 1038, 1040 of the pawl 1016 and the clutch disk arm 1036, the free pawl end 1052 with the pawl end stop 1050' of the spring element 1048' and the second clutch disk stop 1140 and the second load transfer structure 1142 on the driving element disk 1010 and on the clutch disk ring 1024.

The second load transfer structure 1142 and second clutch disk stop 1140 are only described with regard to the first embodiment, however, the same structures can be provided in all of the discussed embodiments.

The clutch disk stop 1068 and the first circumferential end 1032 are arranged near the inner circumference of the clutch disk ring 1024. Further, a face 1069 of the first circumferential end 1032 against which the clutch disk stop 1068 abuts, is directed essentially in tangential direction with regard to the clutch disk ring 1024. Therefore, the force acting on the clutch disk element 1022, when it is entrained by the driving element 1002, acts essentially in tangential direction, minimizing additional frictional forces at the interface between the clutch disk ring 1024 and the retainer ring 1054 when the clutch disk element 1022 rotates relative to the retainer ring 1054.

The distance between the clutch disk stop 1068 and the expansion spring 1030 should be as small as possible. In this example, the clutch disk stop 1068 lies against the attachment of the end of the expansion spring 1030. For this reason, the clutch disk ring 1024 exerts a compressing force on the expansion spring 1030 and thereby further reduces the frictional forces between the clutch disk ring 1024 and the retainer ring 1054.

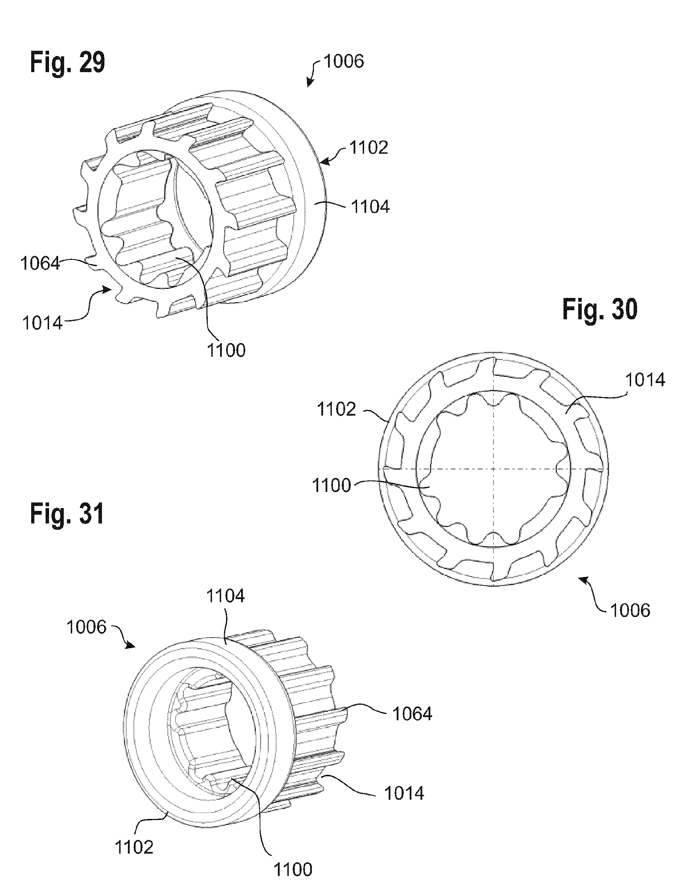

Figures 29 to 31 show a driven element 1006 according to one possible embodiment.

The driven element 1006 is an integrally formed, singular component. It comprises the driving gear 1014 carrying the teeth 1064.

Further, the driven element 1006 comprises a spool axis seat 1100 for coupling with regard to rotation with the seat belt spool. In this example, the belt spool axis seat 1100 has a non-rotational symmetric geometry adapted to fit a corresponding structure on the circumference of the belt spool axis that hinders the belt spool axis from rotating relative to the driven element 1006. The geometry of the belt spool axis seat 1100 is chosen so that the belt spool axis can only be inserted in exactly one position. In this example, the geometry comprises three groups of radially extending projections distributed along the inner circumference of the belt spool axis seat, each group having a different number of projections.

The driven element 1006 also comprises a spool bearing part 1102 for supporting the seat belt spool axis formed at an outer circumferential surface 1104 of the driven element 1006. The spool bearing part 1102 serves as one of two bearing surfaces for one axial end of the seat belt spool axis. The other bearing surface is e.g. arranged at the clutch housing 1061 (not shown).

The driven gear 1014 is arranged at one axial end of the driven element 1006 and the spool bearing part 1102 is arranged at the opposite axial end of the driven element 1006.

The belt spool axis seat 1100 can extend over the complete length of the driven element 1006 or can extend only at an inner circumference of the driven gear 1014.

The driven element 1006 consists in this example of the driven gear 1014, the spool axis seat 1100 and the spool bearing part 1102.

The complete driven element 1006 is for instance made from a suitable metal, e.g. steel and can be manufactured in a known forging technique.

The driven element 1006 described here and shown in Figures 29 to 31 can be used in all clutch embodiments discussed in this application.

### Second embodiment of the clutch

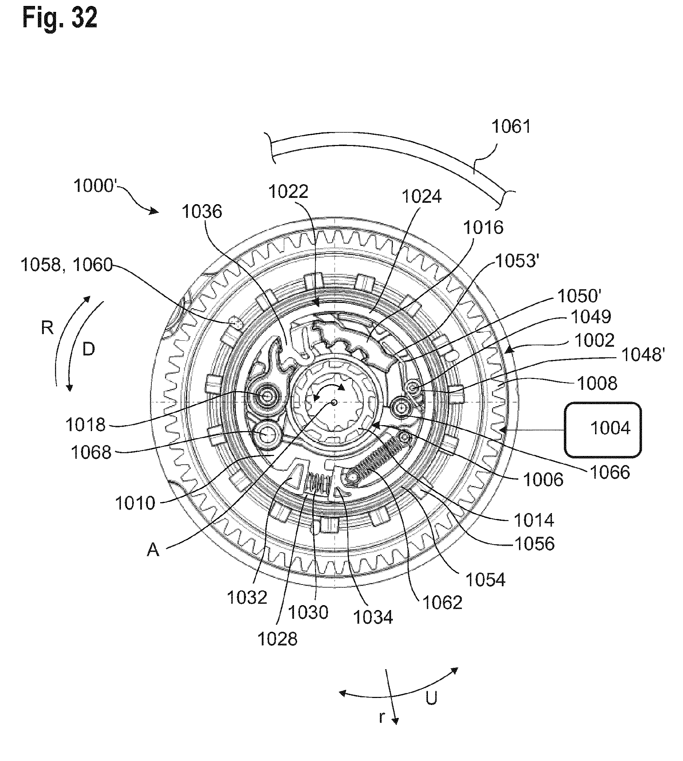

Figures 32 to 40 show a second embodiment of a clutch 1000'.

The clutch 1000' is very similar to the clutch 1000 of the first embodiment, with the distinction that the ramp structure is omitted and the release mechanism includes the spring element 1048' and the pawl 1016. In this example, the spring element 1048' is similar to the spring element 1048 of the first embodiment (shown in detail in Fig. 13a).

Figure 32 shows the clutch 1000' in its neutral position.

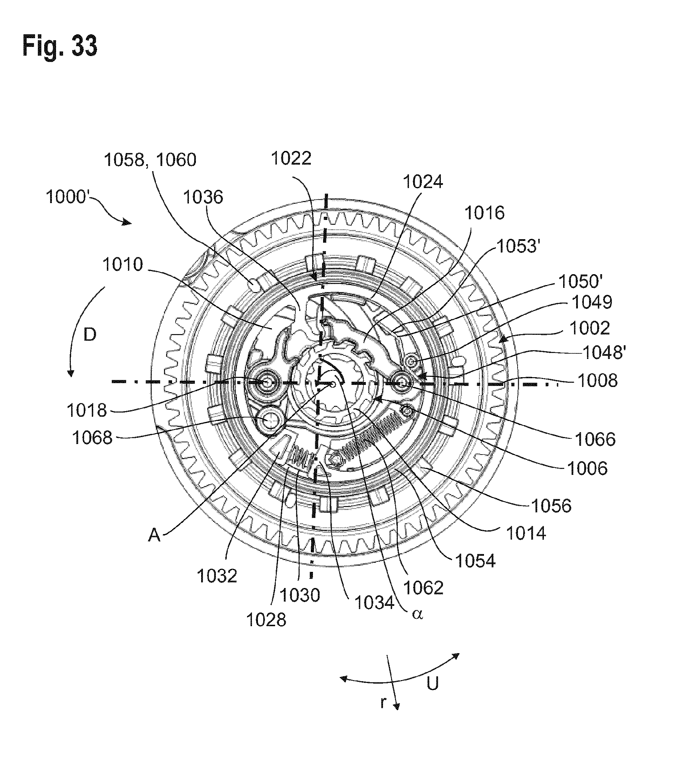

Figure 33 shows the clutch 1000' in its engaged position.

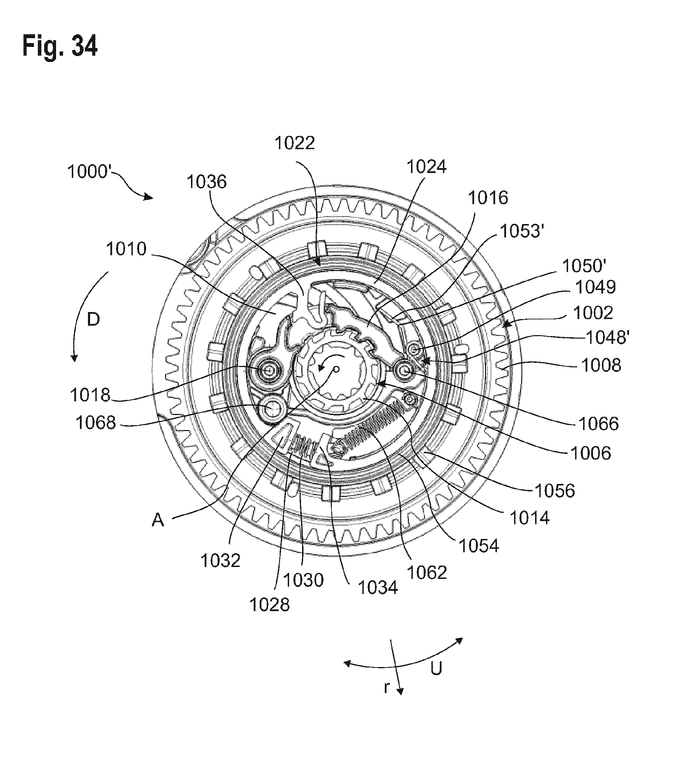

Figure 34 shows the clutch 1000' at the beginning of the transfer in to the decoupled position, but still engaged.

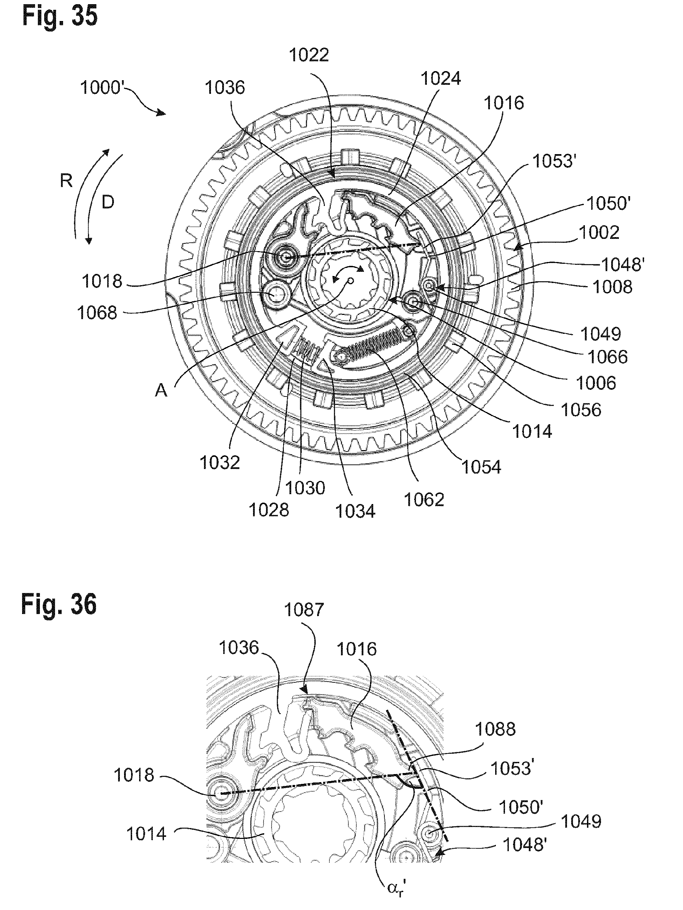

Figures 35 and 36 show the clutch 1000' in its decoupled position.

The function of the clutch 1000' is identical to the clutch 1000 with the exception of the transfer of the clutch back into the neutral position from the decoupled position.

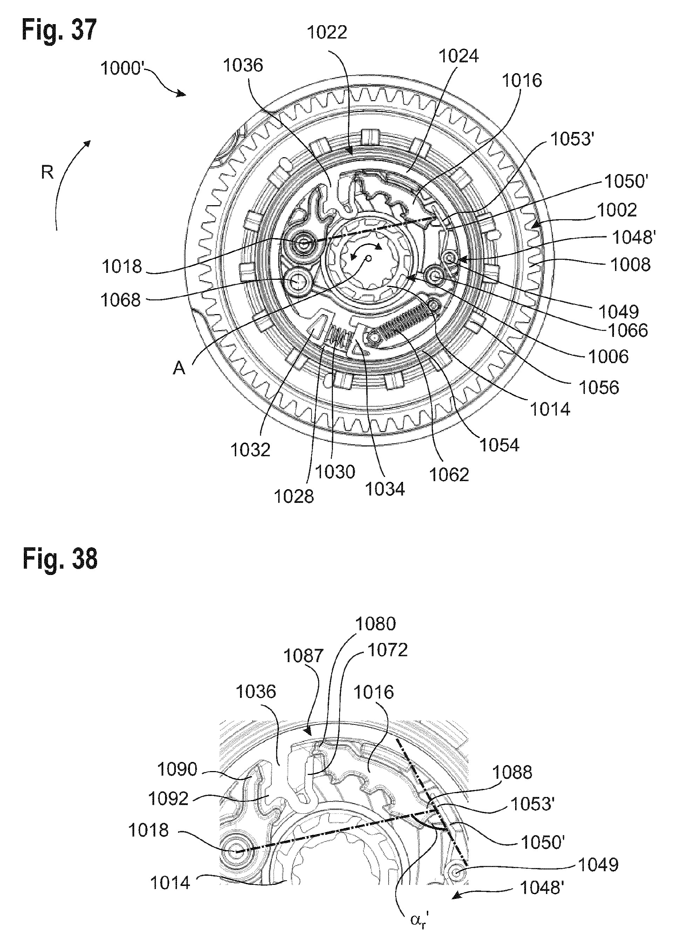

Figures 37 and 38 show the clutch 1000' at the beginning of the transfer from the decoupled position to the neutral position.

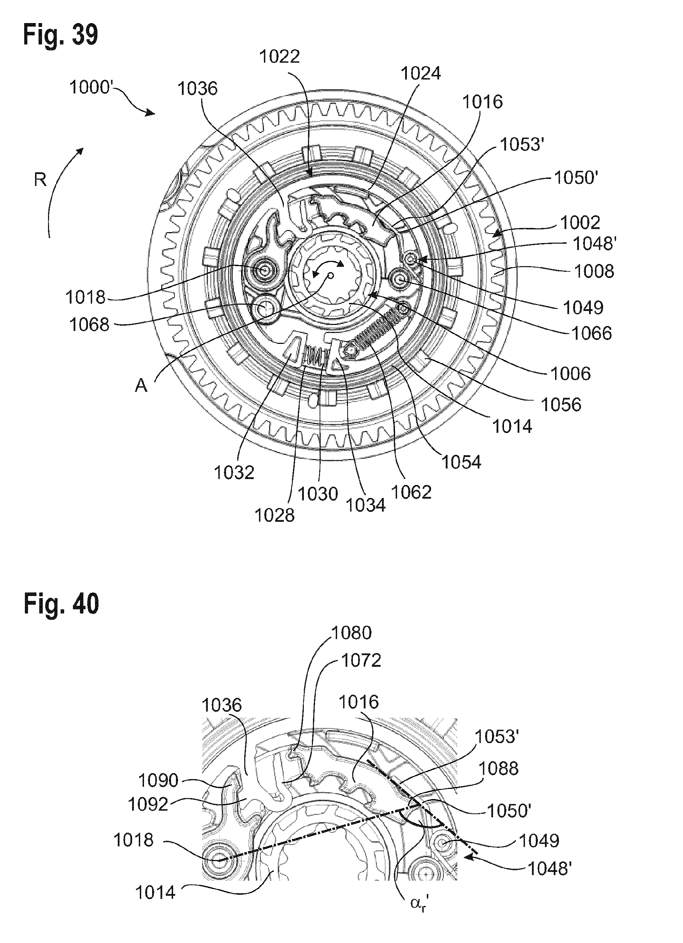

Figures 39 and 40 show the clutch 1000' shortly before reaching the neutral position from the decoupled position.

In this embodiment, the contact section 1053' of the spring element 1048' takes the place of the contact face 1046 of the ramp structure 1044 in the first embodiment.

In the decoupled position, the free end 1052 of the pawl 1016 is clamped at the contact section 1053' of the spring element 1048'. As in the first embodiment, the pawl 1016 is additionally arrested by the latching connection 1087 with the clutch disk arm 1036.

To transfer the clutch 1000' from the decoupled position back into the neutral position, the reversible drive 1004 is rotated in releasing direction R, and the pointed tip 1088 of the free end 1052 of the pawl 1016 is pushed against the contact section 1053. The angle αᵣ' between the contact section 1063' and an imaginary lie between the pivot axis 1018 and the pointed tip 1088 is slightly obtuse (in radial inwards direction), so that an inwardly directed force results. Consequently, the pawl 1016 is pushed along the contact section 1053' in direction to the pawl end stop 1050', while the contact section 1053' slides further radially behind the free end 1052 of the pawl 1016 and the clamping force on the pawl 1016 lessens further. The inward motion of the pawl 1016 is supported by the inwardly directed tension force of the spring element 1048', as the contact section 1053' is deflected radially outwards in the decoupled position.

At the same time, the protrusion 1080 on the pawl 1016 that is part of the latching connection 1087 moves away from the flexible leg 1072 of the clutch disk arm 1036 in circumferential direction, as the clutch disk element 1022 is retained by the retainer ring 1054, leading to the opening of the latching connection 1087.

The pawl 1016 is now held in the neutral position by the protrusions 1090, 1092 on the pawl 1016 and the clutch disk arm 1036 and the pawl end stop 1050 on the clutch disk spring 1048', but is again free to pivot radially inwards when the reversible drive 1004 rotates in driving direction D.

### Third embodiment of the clutch

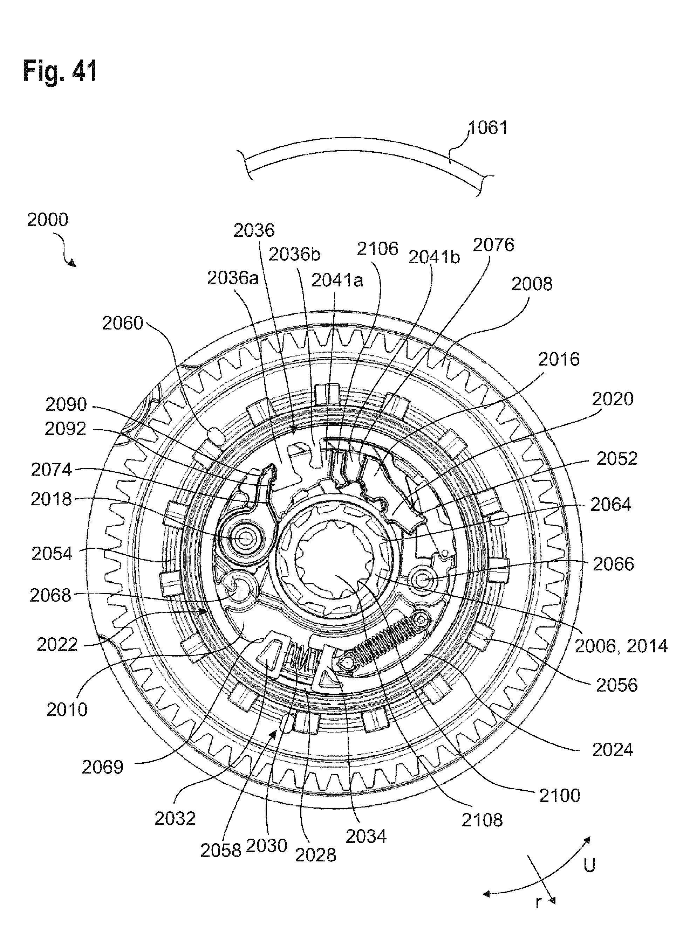

Figures 41 - 48 show a third embodiment of a clutch 2000 for a seat belt tensioner.

The general design of clutch 2000 is similar to that of the already discussed clutch 1000 of the first embodiment.

The clutch 2000 differs from the clutch 1000 of the first embodiment in the form of the pawl 2016 and the clutch disk element 2022 and also in the design of the locking mechanism that keeps the pawl in the decoupled position.

The clutch disk element 2022 is arranged in axial direction on top of the driving element disk 2010 (as in the first embodiment) and is coupled with a surrounding retainer ring 2054 by frictional forces. As in the first embodiment the clutch disk element 2022 comprises a clutch disk ring 2024 that is discontinuous in the circumferential direction, where the gap 2028 is bridged by an expansion spring 2030, extending between the two circumferential ends 2032, 2034 of the clutch disk ring 2024 and pressing the circumferential ends 2032, 2034 apart.

The retainer ring 2054 has radially extending spokes 2056 that interact with stopping pins 2060 of the retaining structure 2058 on the clutch housing 2061 that is fixedly arranged at a housing of the clutch 2000. Therefore, as in the first embodiment, the retainer ring 2054 can rotate only to a certain extent before the spokes 2056 come into contact with the nearest stopping pin 2060.

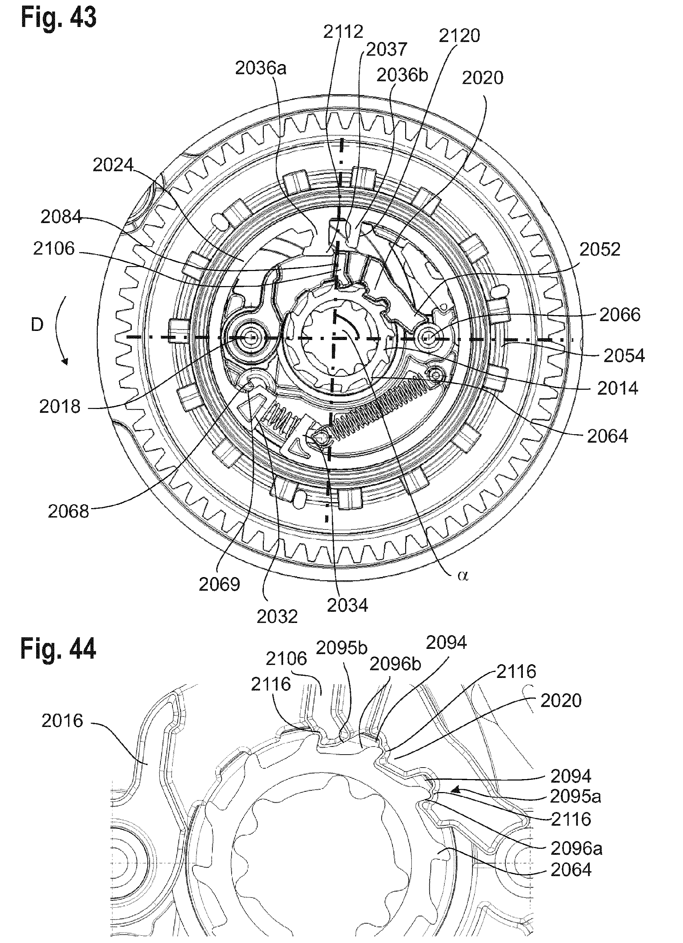

The clutch disk element 2022 further comprises a clutch disk arm 2036 that interacts with a pawl 2016 to move the pawl 2016 between the neutral position shown in Figure 41 and the engaged position shown in Figure 43. Interaction between the clutch disk arm 2036 and the pawl 2016 takes place via guiding geometries 2038, 2040 arranged on the clutch disk arm 2036 and the pawl 2016.

The pawl guiding geometry 2040 comprises an axial recess 2041 in a surface of the pawl 2016. Along the pawl 2016, the recess 2041 is interrupted by a web-like protrusion 2106 extending mostly along the radial direction. The protrusion 2106 rises in axial direction above the plane of the recess 2041 and so divides the recess 2041 into two parts 2041 a, 2041 b in the circumferential direction. The circumferential faces of the protrusion 2106 are part of the pawl guiding geometry 2040. A runway 2084 for guiding the pawl 2016 into the engaged position is provided on the left-hand face of the protrusion 2106 in Figure 43.

In this embodiment, one of the teeth 2020 of the pawl 2016 is arranged at the radial inner end of the protrusion 2106.

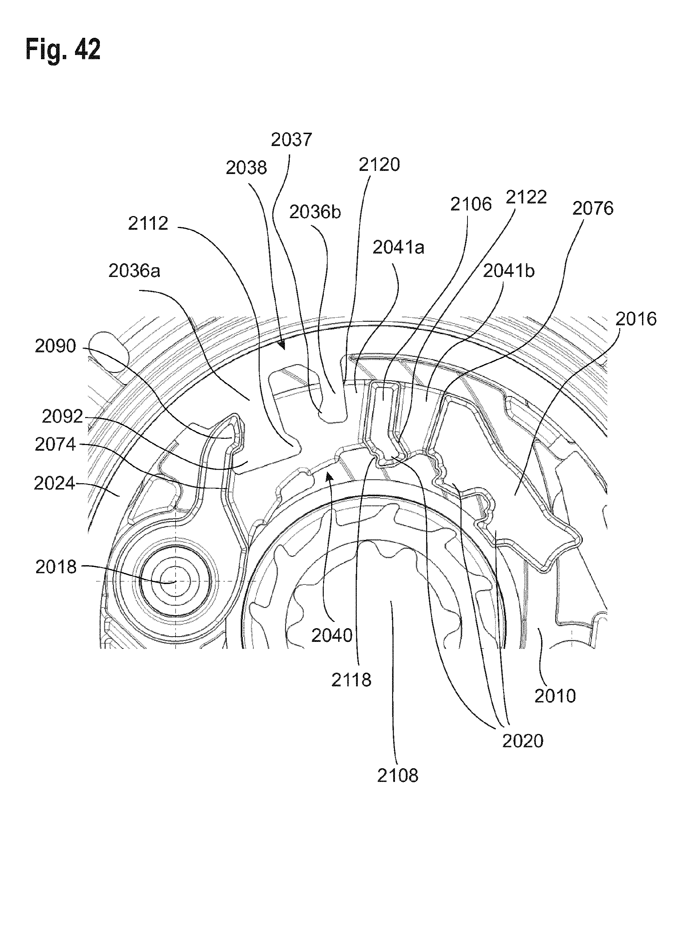

The clutch disk arm 2036 is bifurcated and has two separate, essentially rigid branches 2036a (on the left e.g. in Figure 42) and 2036b (on the right in Figure 42) extending from the clutch disk ring 2024 into the opening 2026 enclosed by the clutch disk ring 2024.

In the neutral position, both branches 2036a, 2036b of the clutch disk arm 2036 lie in the part 2041 a of the recess 2041 that is arranged adjacent to the pivot axis 2018 of the pawl 2016. This position is shown in Figures 41 and 42. The first branch 2036a extends further radially inwards than the second branch 2036b.

The first branch 2036a is in contact with a left-side guiding face 2074 on the pawl 2016. The left side guiding face 2074 ends outwards in radial direction in a protrusion 2090, while the branch 2036a ends at its radial inner end in a protrusion 2092 facing the left-side guiding face 2074 and being arranged directly radially inwards of the protrusion 2090 (similar to the first embodiment). As a result, the pawl 2016 is hindered from pivoting around the pivot axis 2018 and, therefore, from an involuntary engagement with the driven gear 2014, for instance caused by lateral accelerations of the seat belt spool. The belt spool axis 2108 is shown in this embodiment inserted into the belt spool axis seat 2100 of the driven element 2006 (see e.g. Fig. 41).

The left-hand leg 2036a is distanced from the protrusion 2106 and is not in contact with the guiding geometry 2040 of the pawl 2016.

When the reversible drive starts rotating the driving element 2002 in driving direction D, the pawl 2016 is rotated together with the driving element disk 2010 in driving direction D.

The retainer ring 2054 is already or soon becomes blocked by its contact with the stopping pins 2060 and does not rotate. As the clutch disk ring 2024 is coupled by friction to the retainer ring 2054 and the driving element disk 2010 does not yet apply a force to the clutch disk element 2022, the clutch disk element 2022 also stays in position.

As a result, the pawl 2016 rotates relatively to the clutch disk arm 2036. The second branch 2036b comes on its right-hand side into contact with the runway 2084 on the protrusion 2106 on the pawl 2016 and starts to pivot the pawl 2016 radially inwards towards the driven gear 2014, while the protrusion 2106 slides radially inwards along the second branch 2036b.

As in the previously described embodiments, the runway angle α between the runway 2084 and an imaginary straight line between the pawl pivot axis 2018 and the pawl end stop 2066 lies between 80° and 120° in the engaged position, where the pawl 2016 is in contact with the pawl end stop 2066 (see Fig. 43).

The protrusion 2106 on the pawl 2016 loses contact with the second branch 2036b when the pawl 2016 engages the driven gear 2014 and the teeth 2020 on the pawl 2016 mesh with teeth 2064 of the driven gear 2014.

In the engaged position shown in Figure 43, the protrusion 2106 lies in circumferential direction between the first and second branches 2036a, 2036b, but is positioned completely radially inwards of the second branch 2036b.

On its radial inward end, on the right-hand side in Figure 43, the first branch 2036a comprises a protrusion 2112 directed in circumferential direction. This protrusion 2112 abuts against the web-like protrusion 2106 on the pawl 2016 (or is in close proximity to the web-like protrusion 2106) when the pawl 2016 has completely engaged the driven gear 2014.

After the engagement process is completed, the driving element 2002 entrains the clutch disk element 2022, the first branch 2036a being pushed by the protrusion 2106 of the pawl 2016.

Additionally, the driving element disk 2010 can be provided with a clutch disk stop 2068 that, after a predetermined rotation of the driving element 2002 comes into contact with a tangential face 2069 on the first circumferential end 2032 of the clutch disk ring 2024 when the engagement process is complete, and, from this point in time, pushes the clutch disk element 2022 along in driving direction D.

As in the first embodiment, the free end 2052 of the pawl 2016 is supported by a pawl stop 2066 on the driving element disk 2010.

Figure 44 shows the teeth 2020 of the pawl 2016 in engagement with the teeth 2064 of the driven gear 2014. In this example, the tooth flanks 2095a pointing in driving direction D of the last three teeth 2020 of the pawl 2016 each have a protrusion 2116 approximately in the middle of their extension.

In the engaged position, the flanks 2096b of the teeth 2064 engage the teeth 2020 of the pawl 2016 only from the tips of the teeth 2020 to the protrusions 2116 so that a gap 2094 results between the radial ends of the teeth 2064 of the driven gear 2014 and the body of the pawl 2016 between the teeth 2020. As is discussed with regard to the gaps 1094 in the first embodiment, the gaps 2094 prevent an unintended decoupling due to lateral impulses transmitted to the clutch 2000 by the seat belt spool axis 2108.This form of the teeth 2020 of the pawl 2016 could also be used in the other clutch embodiments.

The clutch 2000 is returned form the engaged position back into the neutral position by rotating the driving element 2002 in the releasing direction R.

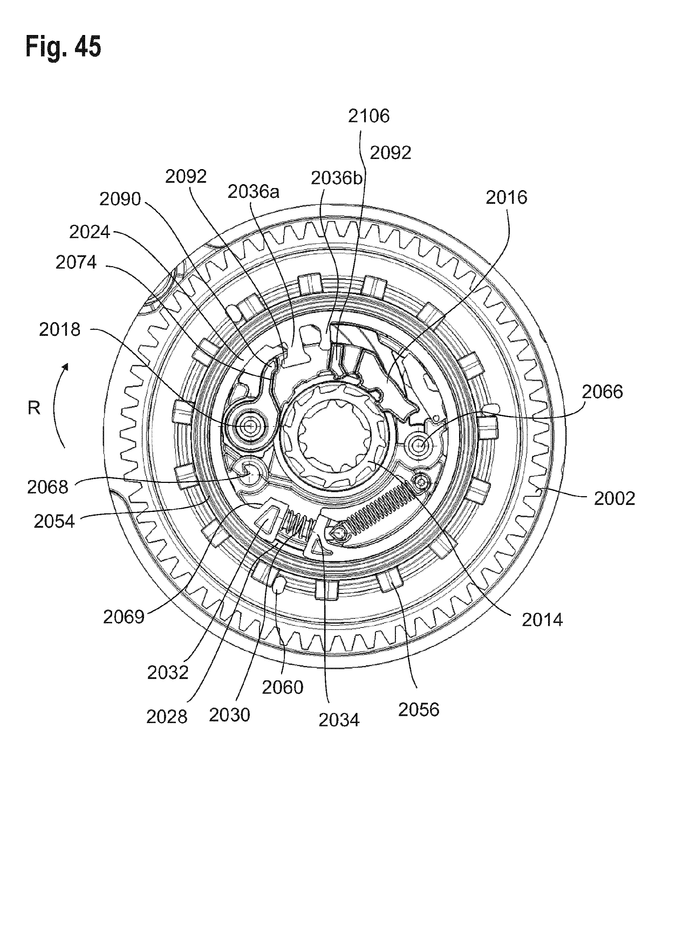

At the start of the rotation the driving element 2002 rotates together with the pawl 2016 clockwise in releasing direction R (in Figure 45), until the protrusion 2090 on the pawl 2016 comes into contact with the protrusion 2092 on the first branch 2036a of the clutch disk arm 2036. Due to the pawl 2016 being pivoted radially inwards, both projections 2090, 2092 are arranged at the same radial position and abut at their circumferential ends.

The clutch disk element 2022 together with the retainer ring 2054 is entrained in releasing direction R by the pawl 2016 until the spokes 2056 of the retainer ring 2054 come into contact with the nearest stopping pins 2060 so that the retainer ring 2054 is blocked from further rotation. Due to the frictional coupling, the clutch disk element 2022 stops rotating, too. The pawl 2016 is pivoted radially outwards by the contact of the projections 2090, 2092 back into its neutral position. During this movement, protrusions 2090, 2092 on the pawl 2016 and the clutch disk arm 2036 slide along each other until the clutch 2000 reaches its neutral position again.

The clutch 2000 is now ready for being engaged again with the driven gear 2014 by starting the reversible drive in the driving direction D.

The change between the neutral position and the engaged position and back again can be repeated as often as required.

However, if the pyrotechnic drive is activated (not shown here, but arranged identically to the first embodiment for driving the belt spool axis 2108), the driven gear 2014 will be rotated in driving direction D with a far higher velocity than the reversible drive applies to the driving element 2002.

As a result, the driven gear 2014 will rotate with regard to the pawl 2016, and the tooth flanks 2096b will impact on the tooth flanks 2095b of the teeth 2020 and push the pawl 2016 radially outwards.

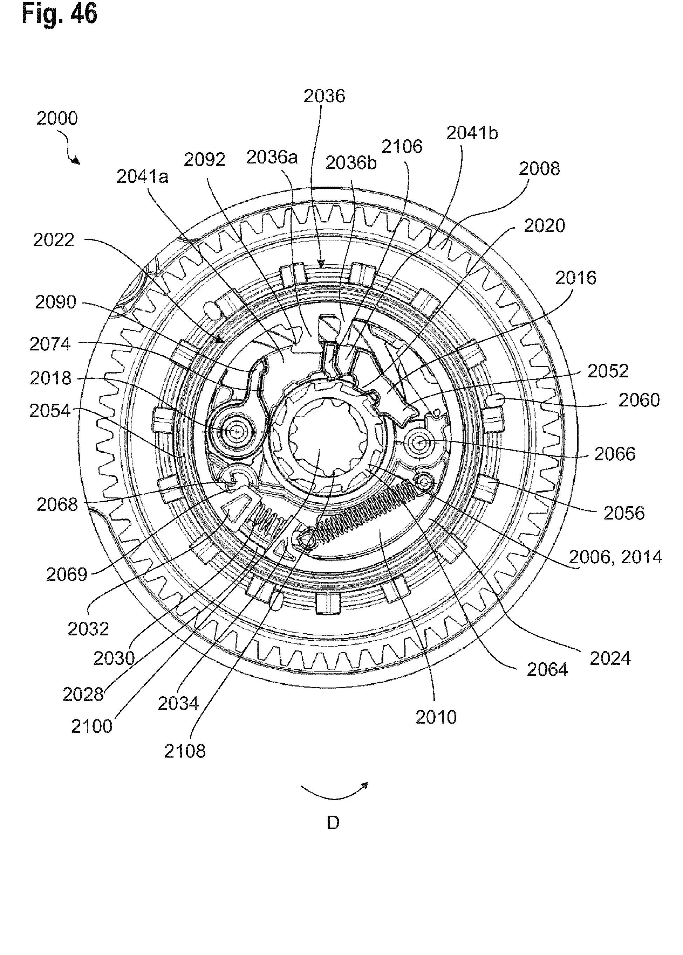

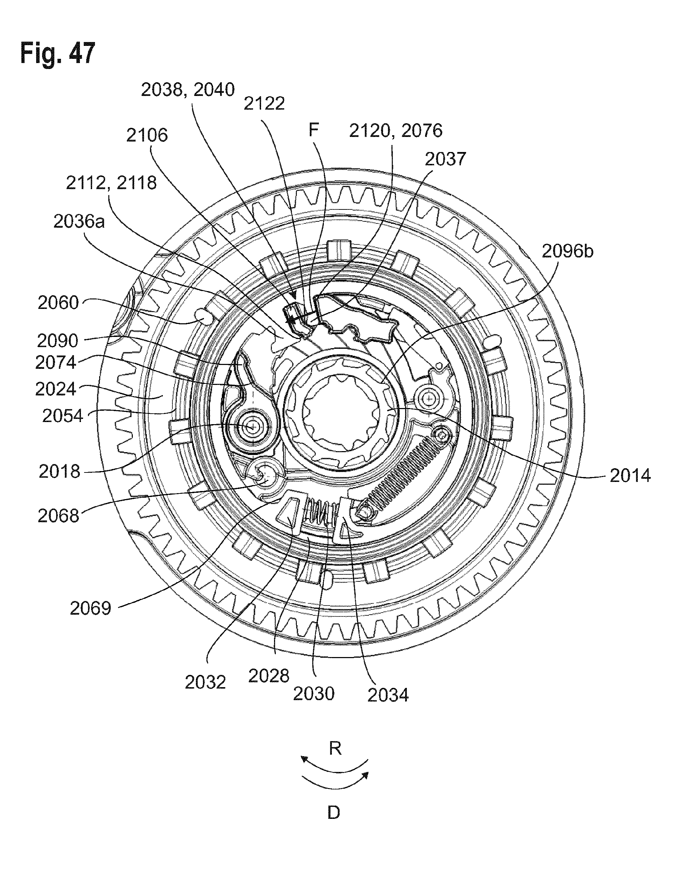

The clutch disk element 2022 is still in the position it has in the engaged position of the clutch 2000 in relation to the driving element 2002 (see Figures 43 and 46). Therefore, the protrusion 2106 on the pawl 2016 will slide in-between the first and second branch 2036a, 2036b of the clutch disk arm 2036 when the pawl 2016 swivels outwards. As the kinetic energy imparted on the pawl 2016 by the activation of the pyrotechnic drive is high enough, the second branch 2036b will be slightly deformed to allow the geometries 2038, 2040 to slide into each other. This is shown in Figures 46 and 47.

The second branch 2036b of the clutch disk arm 2026 is provided with a small protrusion 2037 at its radial inner end, facing the first branch 2036a. The protrusion 2037 serves as a protection against an unintended decoupling, when a retraction spring of the seat belt retractor 120 is turning the seat belt spool 110 faster in driving direction D than the reversible drive 1004 in the engaged position (not shown).

Since the decoupled position will be reached mainly by the already correctly aligned geometries of the clutch disk arm 2036 and the pawl 2016, a relatively low kinetic energy of the pawl 2016 is sufficient to decouple the clutch 2000.

Protrusion 2037 offers enough resistance to keep the pawl 2016 engaged below the decoupling kinetic energy threshold. When the kinetic energy imparted to the pawl 2016 is high enough, the second leg 2036b is deformed slightly to allow the guiding geometries 2038, 2040 of the clutch disk arm 2036 and the pawl 2016 to slide into each other. A slight clamping force may arise between the guiding geometries 2038, 2040. However, no latching connection in closed, and the locking of the pawl 2016 in the decoupled position, is achieved solely by the interacting geometries making it impossible to pivot the pawl 2016 radially inwards by any movement of the clutch disk element 2022.

Radially just above the tooth 2020 the protrusion 2106 is recessed in circumferential direction on its left-hand side. This recess 2118 will slide behind the protrusion 2112 on the first branch 2036a of the clutch disk arm 2036 in radial direction, as is shown in Figure 35.

If now the reversible drive is turned into driving direction D, the pawl 2016 pushes against the first branch 2036a of the clutch disk arm 2036 with the left-hand face of the web-like protrusion 2106, and also pushes against the radial face 2120 on the right hand side of the second branch 2036b with the guiding face 2076 on the right-hand circumferential edge of the recess 2041 b.

The radial face 2120 lies flat against the also radially extending guiding face 2076. The force F transmitted by the pawl 2016 to the second leg 2036b, therefore, is mainly tangential (indicated in Figure 47), so that no relative motion between the pawl 2016 and the clutch disk element 2022 is induced. As a result, the pawl 2016 only entrains the clutch disk element 2022, and those two components will rotate together without the pawl 2016 being reengaged.

When the reversible drive is turned in releasing direction R, the web-like protrusion 2106 of the pawl 2016 pushes against the second branch 2036b with a surface 2122 that is inclined against the radial direction so that the force acting on the pawl 2016 has a component directed radially outwards. Again, no relative radial motion of the pawl 2016 with relation to the clutch disk arm 2036 is induced.

The clutch 2000 is effectively blocked by this locking mechanism and the pawl 2016 cannot reengage the teeth 2064 of the driven gear 2014. It is also not possible to transfer the clutch 2000 back from the decoupled position into the neutral position.

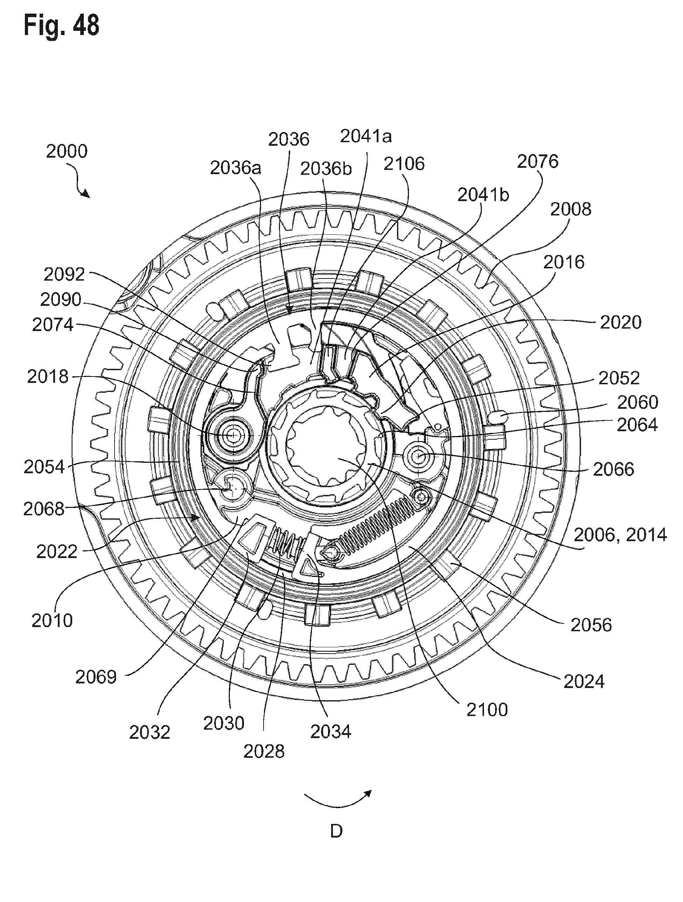

In the case of a tip-to-tip engagement (shown in Figure 48), the pawl 2016 is not swiveled completely radially inwards, as only the tips of the teeth 2020, 2064 of the pawl 2016 and the driven gear 2014 come into contact.

Therefore, the protrusion 2106 of the pawl 2016 stays in contact with the second branch 2036b of the clutch disk arm 2036 and does not slip in circumferential direction into the gap between the branches 2036a, 2036b.

When the pawl 2016 loses contact with the driven gear 2014 due to too high a load being acting on the seat belt spool, the pawl 2016 is accelerated radially outwards, and the projection 2106 slides outwards along the second branch 2036b (along the right-hand face in Figure 48) and pushes the clutch disk element 2022 in driving direction D. This movement will bring the clutch 2000 back into its neutral position, from where it can be reengaged.

### Fourth embodiment of the clutch

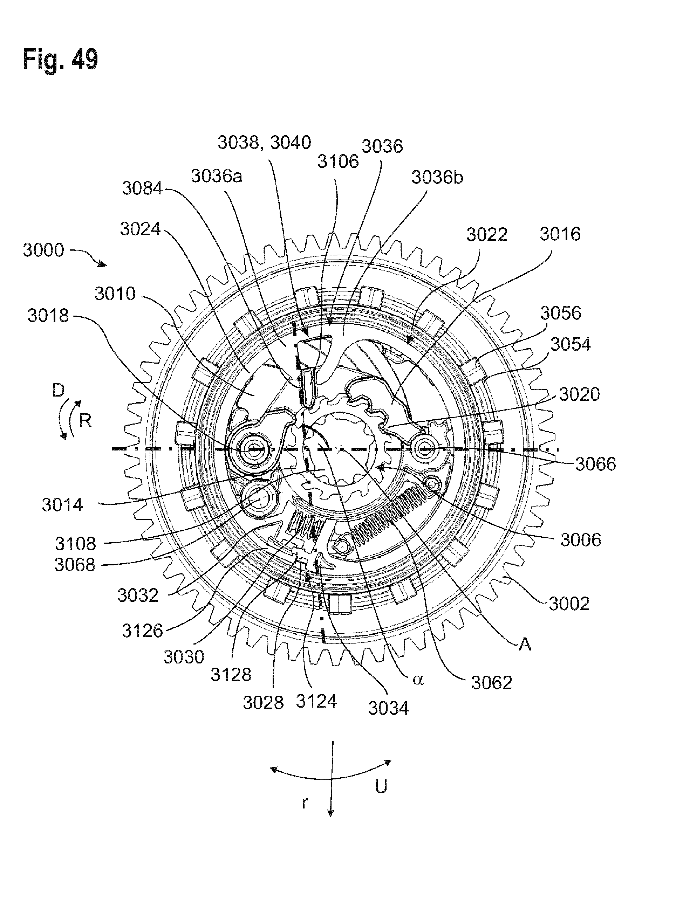

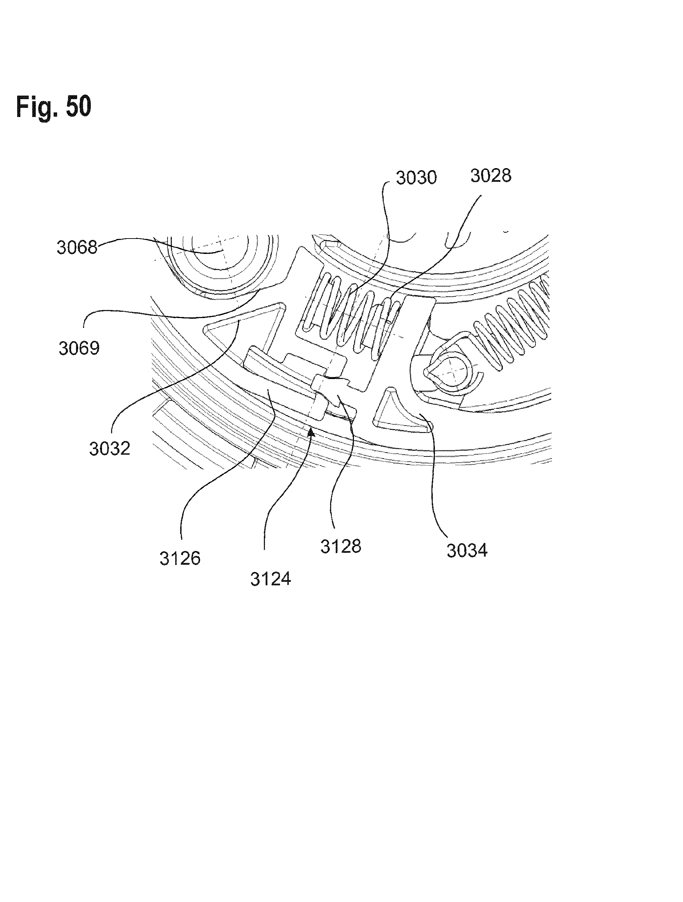

Figures 49 and 50 show a fourth embodiment of the clutch 3000 for a seat belt tensioner.

The general design of the clutch 3000 is identical to that of clutches 1000, 1000' and 2000.

The clutch 3000 also has a driving element 3002 comprising a driving element disk 3010 carrying a pawl 3016 pivotally connected to a pivot axis 3018. The pawl 3016 interacts via guiding geometries 3038, 3040 with a clutch disk element 3022. The clutch disk element 3022 has a clutch disk ring 3024 being arranged coaxially with the driving element 3002 and a seat belt spool axis 3108. The seat belt spool axis 3108 is coupled with regard to rotation with a driven element 3006. A driven gear 3014 is part of the driven element 3006 and has teeth 3064 that come into contact with teeth 3020 of the pawl 3016 when the clutch 3000 is in its engaged position (see Fig. 49).

The clutch disk element 3022 has a clutch disk arm 3036 extending radially inwards parallel to the plane of the driving element disk 3010 and having two branches 3036a, 3036b between which a web-like protrusion 3106 integrally formed with the pawl 3016 is positioned.

The clutch disk ring 3024 is discontinuous along the circumferential direction, having a first circumferential end 3032 and a second circumferential end 3034. As in the previously discussed embodiments, the resulting gap 3028 is bridged by an expansion spring 3030, pressing the circumferential ends 3032, 3034 apart in circumferential direction.

As in the previous embodiments, the retainer ring 3054 surrounds the clutch disk ring 3024 on its outer periphery, and the retainer ring 3054 and the clutch disk ring 3024 are coupled by friction between their inner and outer respective circumferences.

The retainer ring 3054 has radially extending spokes 3056 that interact with locking pins of a retaining structure that allows only a limited rotation of the retainer ring 3054 (not shown here, but identical to that discussed with regard to the previous embodiments).

When the driven element 3002 is rotated in driving direction D or in releasing direction R by the reversible drive (not shown), guiding geometries 3038, 3040 on the clutch disk element 3022 and the pawl 3016 interact to push the pawl 3016 radially inwards into contact with the teeth 3064 of the driven gear 3014 in the engaged position or back again into the neutral position shown in Figure 49. These motion sequences are similar to the engagement and disengagement processes described for the previous clutch embodiments. As in the third embodiment, a runway 3084 is provided on the web-like protrusion 3106 on the pawl 3016 to guide the pawl 3016 into the engaged position. The runway angle α between the runway 3084 and an imaginary straight line between the pawl pivot axis 3018 and the pawl end stop 3066 lies between 80° and 120° in the engaged position, where the pawl 3016 is in contact with the pawl end stop 3066 (see Fig. 43).

Also, in the engaged position, a radially extending face 3069 of a clutch disk stop 3068 is in contact with the first circumferential end 3032 of the clutch disk ring 3024, as described above.

In the fourth embodiment, the gap 3028 is additionally bridged by a locking mechanism that is able to keep the clutch 3000 in a decoupled position. The locking mechanism in this example is a latching connection 3124 arranged parallel to the expansion spring 3030 radially outwards of the expansion spring 3030. Details are shown in Figure 50.

The latching connection 3124 is formed by a first and a second latching element 3126, 3128 that are adapted to be moved against each other in circumferential direction to close the latching connection 3124. In this example the first latching element 3126 has two arms being able to snap around the head of a locking pin that forms the second latching element 3128, to close the latching connection 3124.

The first and the second latching element 3126, 3128 are here formed integrally with the first and second circumferential ends 3032, 3034 of the clutch disk ring 3024.

The distance between the latching elements 3126, 3128 decreases when the first and the second circumferential ends 3032, 3034 are moved towards each other in circumferential direction. When the latching connection 3124 is closed, the diameter and the circumference of the clutch disk ring 3024 are permanently reduced.

When the latching connection 3124 is in its open state, as shown in Figures 49 and 50, the expansion spring 3030 pushes the first and second circumferential ends 3032, 3034 of the clutch disk ring 3024 apart, keeping up the frictional force between the clutch disk ring 3024 and the retainer ring 3054. The clutch 3000 can be operated normally, the pawl 3016 being able to pivot into the engaged position and back into the neutral position.

During the normal engagement and disengagement of the clutch 3000 effected by the reversible drive, the latching connection 3124 always stays in its open state and there is always a frictional coupling between the clutch disk ring 3024 and the retainer ring 3054. As in the previously described embodiments, the frictional force can be overcome by the reversible drive in certain situations.

The latching connection 3124 closes when the clutch 3000 assumes its decoupled position.

When the pyrotechnic drive is initiated, the belt spool axis 3108 and the driven gear 3014 coupled therewith start to turn with high velocity in driving direction D. As a result, the pawl 3016 is accelerated radially outwards back into its neutral position, because the teeth 3064 of the driven gear 3014 impact on the teeth 3020 of the pawl 3016.

The clutch disk ring 3024 is subjected to lateral forces in the initial phase of the activation of the pyrotechnic drive. The pyrotechnic drive comprises e.g. a snake that is accelerated tangentially to the belt spool axis 3108 so that short lateral impulses are transmitted to the belt spool axis 3108 and, accordingly, also to the clutch 3000.

The forces acting on the clutch disk element 3022 lead to a momentary compression of the clutch disk ring 3024, as the clutch disk ring 3024 is inherently flexible because of the gap 3028 in its circumference. The distance of the circumferential ends 3032, 3034 carrying the latching elements 3126, 3128 decreases so that the latching elements 3126, 3128 snap into each other and close the latching connection 3124. In this example, the head of the locking pin slips between the locking arms until its rear side is gripped by the locking arms.

When the latching connection 3124 is closed, the circumference of the clutch disk ring 3024 permanently decreases. The friction between the clutch disk ring 3024 and the retainer ring 3054 is reduced thereby to such an extent that the clutch disk ring 3024 is no longer coupled by friction to the retainer ring 3054 and can rotate without being stopped by the retainer ring 3054. Effectively, the expansion spring 3030 is bypassed by the closed latching connection 3124 and loses its function.

Should the reversible drive move the driving element 3002 again in driving direction D or in releasing direction R, the clutch disk element 3022 will, therefore, not be held back by the retainer ring 3054 so that relative movement between the driving element 3002 and the clutch disk element 3022 becomes impossible. Instead, the clutch disk element 3022 is entrained by the pawl 3016 and rotates together with the driving element 3002 without the pawl 3016 being pivoted radially inwards. The clutch 3000 is permanently disabled from reengagement. Since the expansion spring 3030 loses its function, the much weaker spring 3062 can now act on the clutch disk element 3022, which, in turn, will keep the pawl 3016 permanently in the decoupled position.

### Fifth embodiment of the clutch

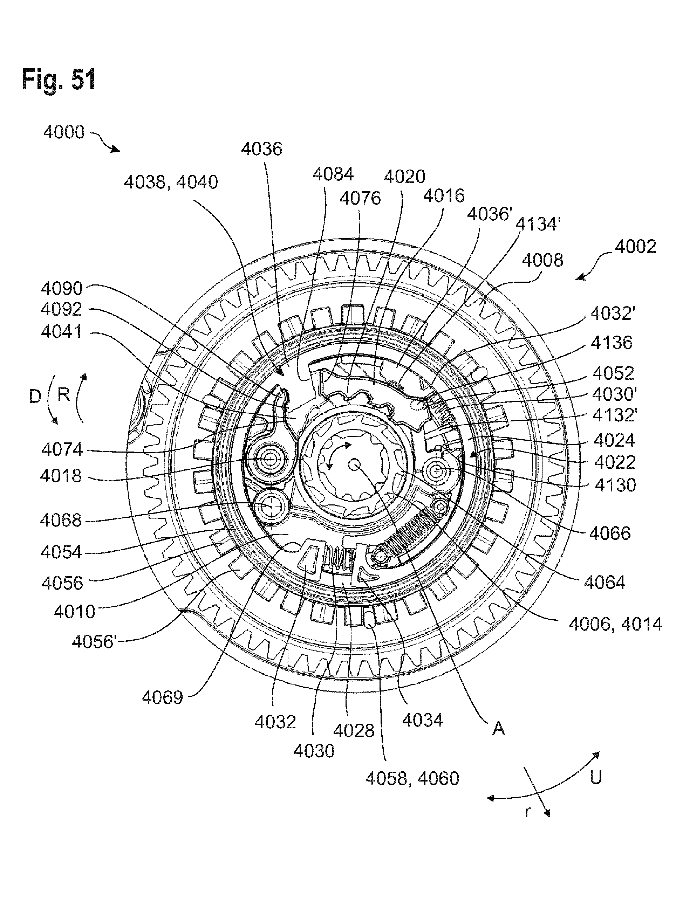

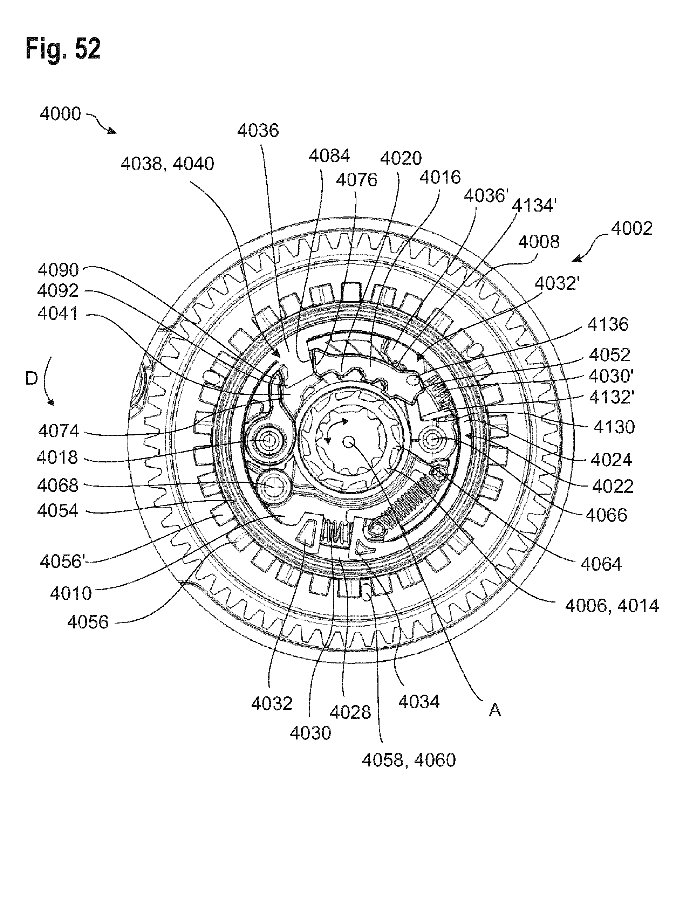

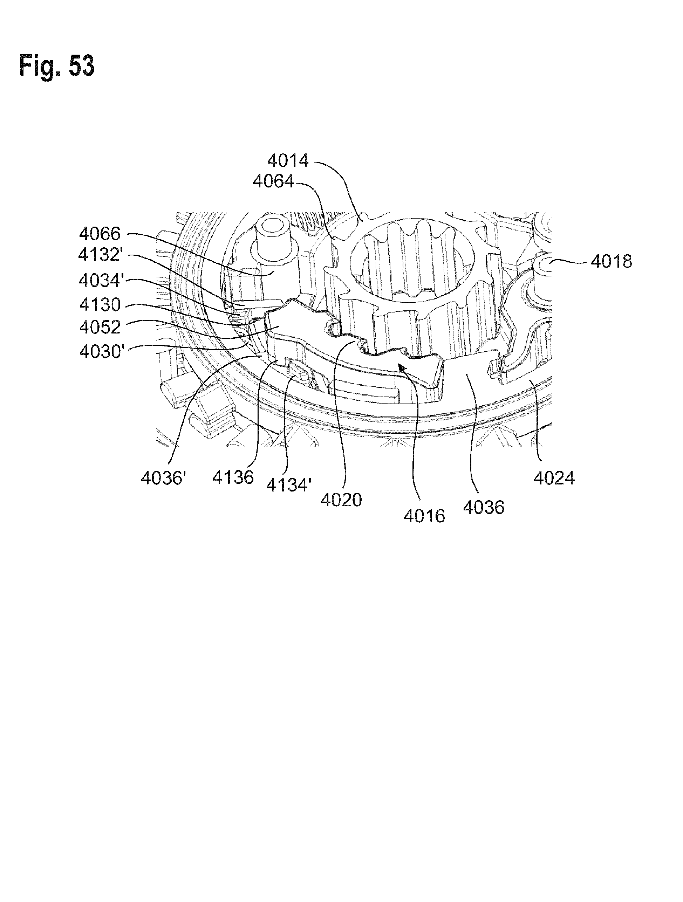

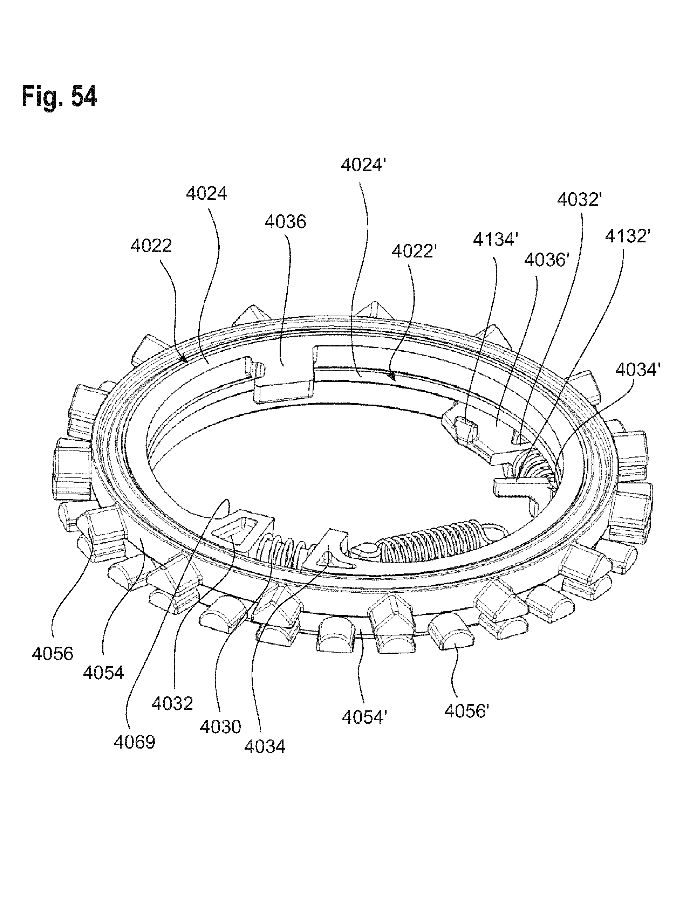

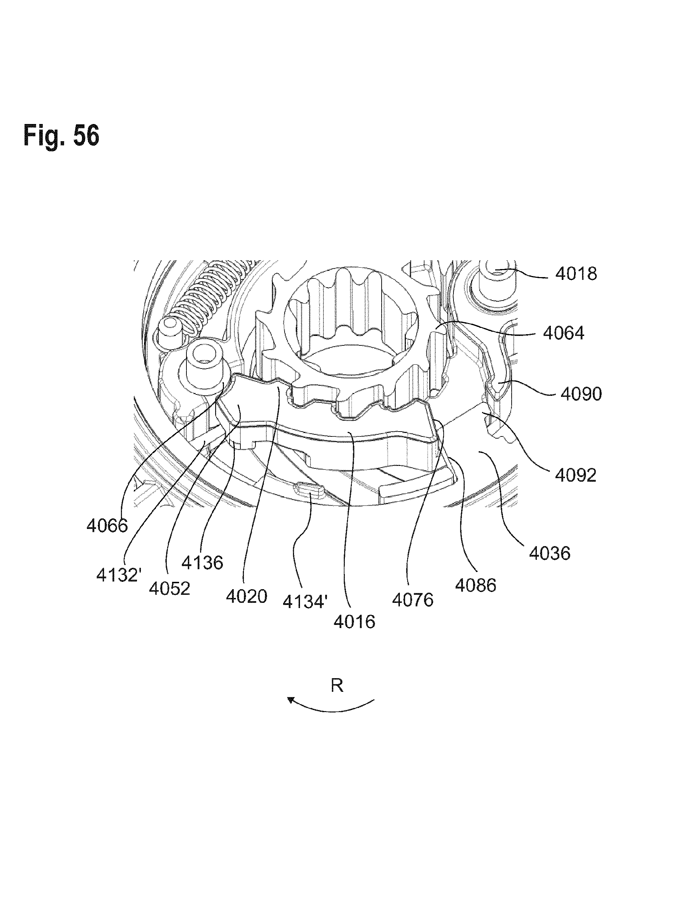

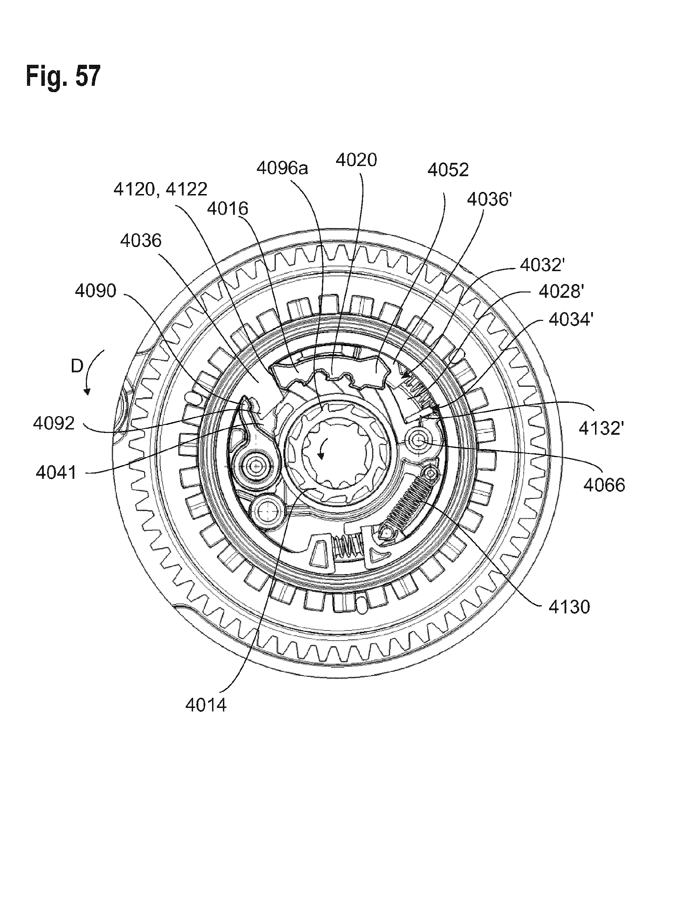

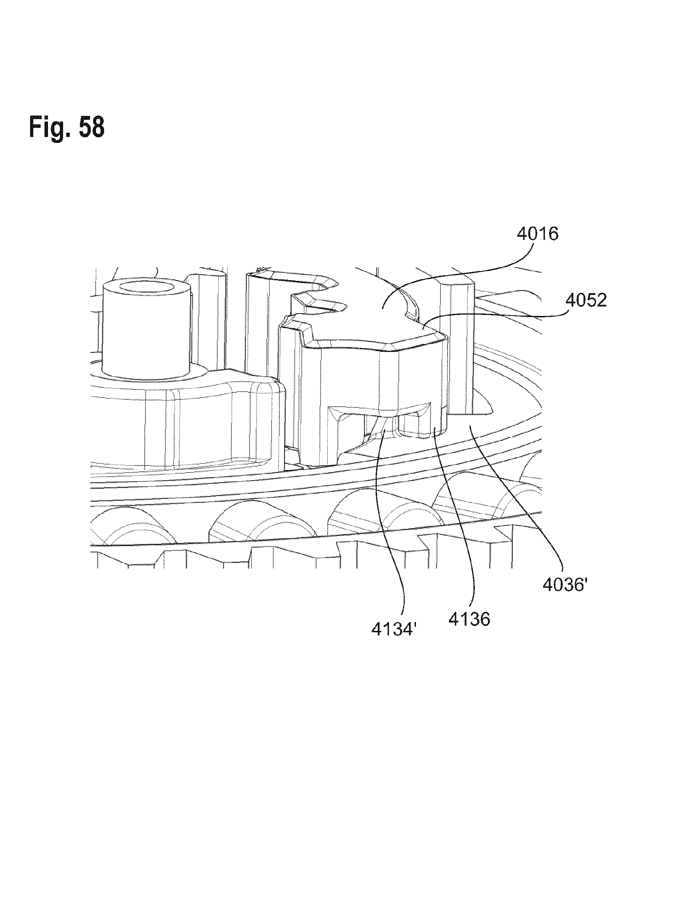

Figures 51 to 61 show a fifth embodiment of a seat belt tensioner clutch 4000.

As in the previous embodiments, the clutch 4000 has a driving element 4002 with a driving gear 4008 that is connected with regard to rotation with a driving element disk 4010 carrying a pawl 4016 that can be swiveled around a pivot axis 4018 rotating together with the driving element disk 4010. The pawl 4016 has several teeth 4020 that are able to engage with teeth 4064 of a driven gear 4014 of a driven element that can be realized as in the previously discussed embodiments.

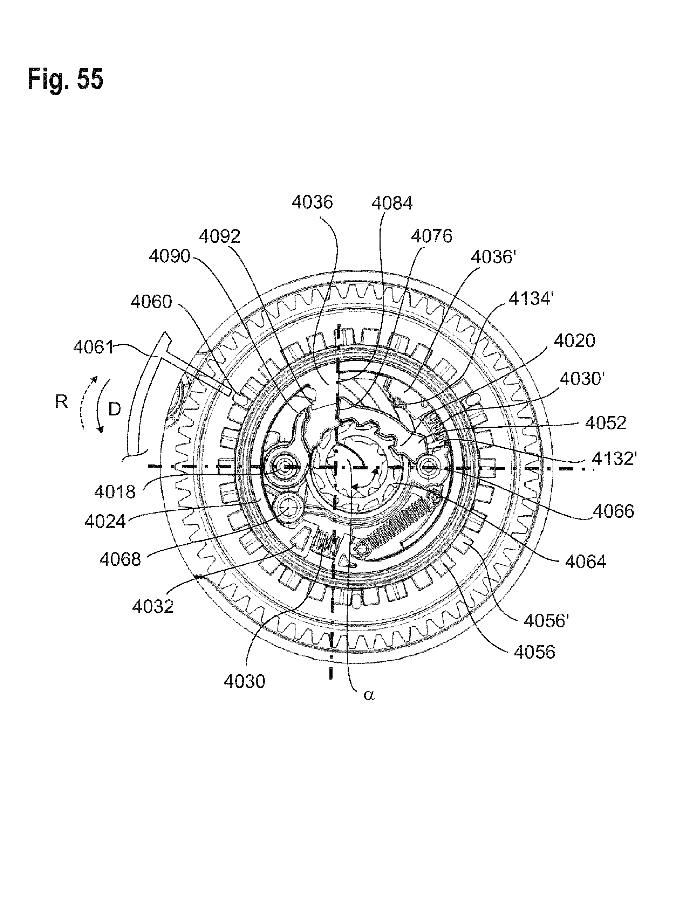

On one face of the driving element disk 4010 a clutch disk element 4022 is arranged having a clutch disk ring 4024 and a clutch disk arm 4036 extending inwards from the clutch disk ring 4024 into an opening 4026 enclosed by the clutch disk ring 4024. The pawl 4016 has an axial recess 4041 that is delimited by left-hand and right-hand guiding faces 4074, 4076. The guiding faces 4074, 4076 are part of a guiding geometry 4040 that interacts with a guiding geometry 4038 on the clutch disk arm 4036 to move the pawl 4016 from the neutral position into an engaged position in which the teeth 4020 of the pawl 4016 mesh with the teeth 4064 of the driven gear 4014 (see Fig. 55) and back into the neutral position shown in Figure 51 where the pawl 4016 is not in contact with the driven gear 4014.

The clutch disk ring 4024 is discontinuous in circumferential direction. The circumferential ends 4032, 4034 of the clutch disk ring 4024 are connected by a expansion spring 4030 bridging the gap 4028 between the circumferential ends 4032, 4034 and pressing the circumferential ends 4032, 4034 apart.

The clutch disk ring 4024 is surrounded by a retainer ring 4054 being coupled by the friction exerted by the expansion spring 4030 to the outer circumference of the clutch disk ring 4024. The retainer ring 4054 has radially extending spokes 4056. Several stopping pins 4060 of a retaining structure that is immovable with regard to a housing 4061 of the clutch 4000 (see e.g. Fig. 55) are arranged between two adjacent spokes 4056, respectively, so that the retainer ring 4054 can only rotate to a limited degree.

To close the clutch 4000, i.e. to move the pawl 4016 from the neutral position shown in Figure 51 to its engaged position shown in Fig. 55, the driving element 4002 is rotated in driving direction D. The driving element 4002 with the pawl 4016, the clutch disk element 4022 and the retainer ring 4054 rotate together until the spokes 4056 of the retainer ring 4054 come into contact with the nearest stopping pins 4060. Then, the retainer ring 4054 is kept back by the stopping pins 4060 and the clutch disk element 4022, being coupled by friction to the retainer ring 4054, is also kept back with regard to the driving element 4002 and the pawl 4016.

As a result, the guiding geometry 4038 of the clutch disk arm 4036 swivels the pawl 4016 radially inwards until its teeth 4020 engage with the teeth 4064 of the driven gear 4014.

During the inward motion of the pawl 4016, a runway 4084 formed on the right-hand face of the clutch disk arm 4036 (in Figure 51) slides along the right-hand guiding face 4076 of the guiding geometry 4040 of the pawl 4016 and pivots the pawl 4016 towards the driven gear 4014. As in the previously described embodiments, the runway angle α between the runway 4084 and an imaginary straight line between the pawl pivot axis 4018 and the pawl end stop 4066 lies between 80° and 120° in the engaged position, where the pawl 4016 is in contact with the pawl end stop 4066 (see Fig. 55).

In the engaged position shown in Figure 55 the radial inner end of the runway 4084 is still in contact with the radial outer end of the guiding face 4076.

The free end 4052 of the pawl 4016 abuts against a pawl stop 4066 on the driving element disk 4010 which helps in transmitting driving force from the reversible drive to the pawl 4016 and, therefore, to the driving gear 4014.

The clutch disk element 4022 is entrained by the pawl 4016 until a clutch disk stop 4068, here in form of an axial projection extending from the driving element disk 4010, comes with its radially extending face 4069 into abutment with the first circumferential end 4032 of the clutch disk ring 4024. From this moment on, the driving element 4002 pushes the clutch disk element 4022 along, surmounting the frictional forces between the clutch disk ring 4024 and the retainer ring 4054. This process is identical to the one described above for the other embodiments.

To disengage the pawl 4016 and to open the clutch 4000, the driving element 4002 is rotated by the reversible drive in the releasing direction R.

The pawl 4016 moves in relation to the clutch disk element 4022, until a protrusion 4090 on the radial outer end of the left-hand guiding face 4074 of the pawl 4016 comes into contact with a circumferential protrusion 4092 on the radial inner end of the clutch disk arm 4036 and starts to push the clutch disk element 4022 in releasing direction R.

Clutch disk element 4022 and retainer ring 4054 rotate together with the driving element 4002, until the spokes 4056 of the retainer ring 4054 come again into contact with the stopping pins 4060. Then, the retainer ring 4054 and the clutch disk element 4022 are retained relative to the driving element 4002, and the guiding face 4074 of the pawl 4016 starts to slide along the left-hand side of the clutch disk arm 4036 which swivels the pawl 4016 radially outwards back into the neutral position.

Transferring the clutch 4000 from the neutral position to the engaged position and back by the reversible drive can be repeating unlimited.

The clutch 4000 comprises a second set of clutch disk element 4022' and retainer ring 4054' that is designed similar to the arrangement of the first clutch disk element 4022 and the first retainer ring 4054.

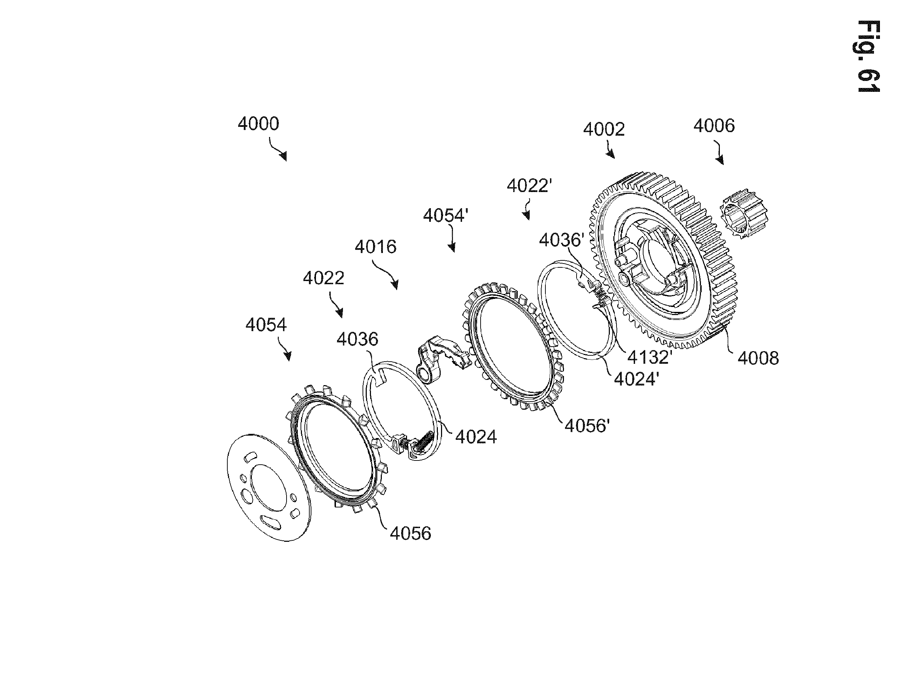

The second clutch disk element 4022' is arranged between the driving element disk 4010 and the first clutch disk element 4022 (see e.g. Fig. 61) and is centered with regard to the common rotation axis A.

Similar to the first clutch disk ring 4024, the second clutch disk ring 4024' is discontinuous in circumferential direction, having two circumferential ends 4032', 4034' that are pressed apart in circumferential direction by a second expansion spring 4030' (see Fig. 51). The second retainer ring 4054' surrounds the second clutch disk element 4022' and is frictionally coupled therewith. The spokes 4056' of the second retainer ring 4054' are arranged with shorter distance than the spokes 4056 of the first retainer ring 4054 (in this case with half the distance). The distance between adjacent spokes 4056' is chosen such that the second retainer ring 4054' cannot move with regard to the stopping pins 4060 arranged between some of the spokes 4056'. The retainer ring 4054', therefore, always stays in place with regard to the housing of the clutch 4000 and does not rotate together with any part of the clutch 4000.

During the engagement motion, the second clutch disk ring 4024' is at first retained due to the friction coupling with the second retainer ring 4054' that is held back by the stopping pins 4060'. As a result, the driving element 4002 rotates relative to the second clutch disk element 4022' until a radially extending step 4130 arranged on the driving element disk 4010 (here arranged in the immediate vicinity of the pawl stop 4066) comes into contact with a projection 4132' radially extending from the second circumferential end 4034' located at the circumferential gap 4028' of the second clutch disk ring 4024' bridged by the second expansion spring 4030'. On further rotation in driving direction D, the second clutch disk element 4022' is entrained by the driving element 4002.

For the normal engagement and disengagement of the clutch 4000 as described above, the second clutch disk element 4022' and the second retainer ring 4054' do not have any function.

However, the second clutch disk element 4022', the second retainer ring 4054' and the pawl 4016 constitute a locking mechanism for blocking the pawl 4016 from reengagement with the driven gear 4014, when the pawl 4016 is transferred into the decoupled position on activation of the pyrotechnic drive, as is explained below. The locking mechanism comprises interacting blocking structures provided on the clutch disk arm 4036' and on the pawl 4016.

The second clutch disk element 4022' comprises a clutch disk arm 4036' extending radially inwards from the second clutch disk ring 4024', the clutch disk arm 4036' being located near the gap 4028' and in this example being part of the first circumferential end 4032' of the second clutch disk ring 4024'.

An axial projection 4134' is arranged at the radial inward end of the clutch disk arm 4036' extending towards the pawl 4016 and forming one of the interacting blocking structures.

The axial projection 4134' interacts with an axial projection 4136 on the pawl 4016, extending towards the driving element disk 4010 and being arranged near the free end 4052 of the pawl 4016. The axial projection 4134' forms the second of the interacting blocking structures.

One or both of the axial projections 4134', 4136 are flexible in the radial and/or axial direction, so that they can deform elastically when a high enough force is applied.

When the pyrotechnical drive is actuated and the driven gear 4014 starts to rotate with a high velocity in driving direction D, the pawl 4016 is accelerated radially outwards by contact of the tooth flanks 4096b of the driven gear 4014 pointing in driving direction D and the tooth flanks 4096a of the teeth 4020 of the pawl 4016, as described for the previous embodiments.

The kinetic energy imparted to the pawl 4016 is high enough to deform one or both of the axial projections 4134', 4136 so that the axial projection 4136 on the pawl 4016 snaps behind the axial projection 4134' on the clutch disk arm 4036'. This situation is shown in Figures 43 and 44.

In contrast, in the neutral position shown in Figures 39 and 40, the axial projections 4134', 4136 are lying adjacent to each other and at the same radial position. The axial projection 4134' on the second clutch disk arm 4036' serves as a pawl end stop for the radial outward movement of the pawl 4016 during normal engagement and disengagement.

Only when the pawl 4016 moves with a high velocity as will be the case when the pyrotechnic drive is actuated, is the kinetic energy of the pawl 4016 high enough to deform the axial projection 4134' and/or the axial projection 4136 so that the axial projection 4136 can pass beyond the axial projection 4134'.

In the decoupled position the clutch 4000 is locked against normal engagement. When the driving element 4002 further rotates in driving direction D, the retainer ring 4054 is still retained by the stopping pins 4060 so that the guiding geometries 4038, 4040 on the pawl 4016 and on the cutch disk element 4022 urge the pawl 4016 inwards.

However, the pawl 4016 is held back by the contact of the axial projections 4134', 4136 and cannot pivot radially inwards.

Therefore, the right side guiding face 4076 cannot slide along the runway 4086 on the first clutch disk arm 4036, and the first clutch disk element 4022 is entrained in driving direction D by the pawl 4016.

In this situation a flat face 4122 that is part of the guiding face 4076 on the pawl 4016 lies against a flat face 4120 on the right-hand side of the clutch disk arm 4036. The force transferred by the pawl 4016 to the clutch disk element 4022 acts essentially tangential (see also the description of the second embodiment).

The second clutch disk element 4022' is still entrained by the driven element 4002 due to the contact of the step 4130 on the driving element disk 4010 with the radial projection 4132' of the second clutch disk element 4022' so that there is no relative motion between the pawl 4016 and the second clutch disk element 4022'.

The clutch 4000 is effectively hindered from reengagement.

The contact between the two axial projections 4134', 4136 also secures the clutch 4000 against unintended reengagement due to lateral impulses on the clutch 4000 that may be caused by the pyrotechnical tensioning process.

The clutch 4000 comprises a release mechanism formed by the second clutch disk element 4022', the second retainer ring 4054' and the pawl 4016, for transferring the pawl 4016 from the decoupled position back into the neutral position so that the clutch 4000 is reversible.

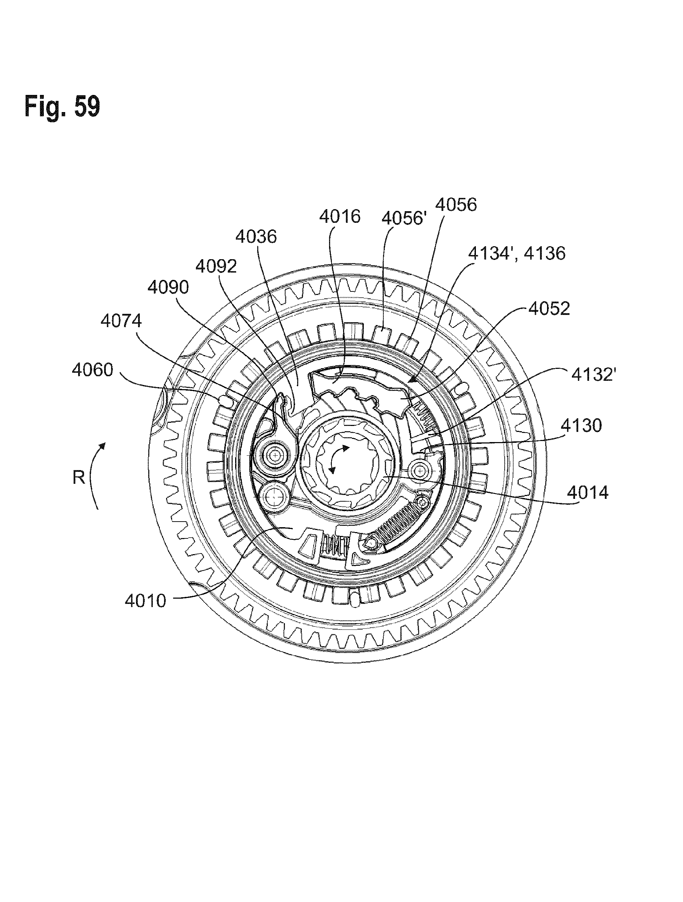

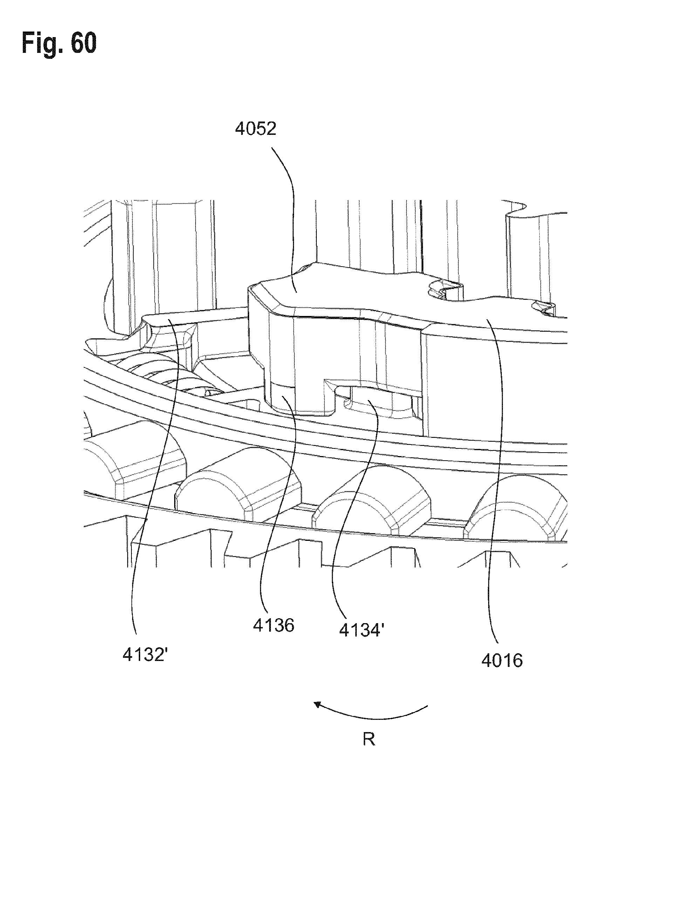

To transfer the clutch 4000 from the decoupled position back into the neutral position (see Figures 59 and 60), the reversible drive is engaged to rotate the driving element 4002 in releasing direction R.

The second clutch disk element 4022' is held back by the second retainer ring 4054' that, in turn, is held back by the stopping pins 4060 and the spokes 4056'.

The driving element disk 4010 rotates away from the clutch disk arm 4036', and the axial projection 4136 is moved away in circumferential direction from the axial projection 4134' on the clutch disk arm 4036'. This movement is possible, because the axial projections 4136, 4134' are arranged behind each other in radial direction, but do not block each other in circumferential direction.

During this motion, the left-hand guiding face 4074 on the pawl 4016 comes into contact with the clutch disk arm 4036 of the clutch disk element 4022 and pushes the clutch disk element 4022 along in releasing direction R. The projections 4090, 4092 of the pawl 4016 and of the clutch disk arm 4036 are arranged behind one another in radial direction so that the pawl 4016 is still hindered from pivoting inwards.

Once the axial projection 4136 on the pawl 4016 is free from the axial projection 4134' on the second clutch disk arm 4036', the pawl 4016 moves once again into its neutral position, from where it can be reengaged.

While a reengagement of the clutch will normally not be intended once the pyrotechnic drive was activated, the pawl 4016 is also moved into the decoupled position when a tip-to-tip engagement between the pawl 4016 and the driven gear 4014 occurs (see also the description of the previous embodiments). In a tip-to-tip engagement situation, the teeth 4020 of the pawl 4016 lose contact with the teeth 4064 of the driven gear 4014 when a certain load limit is surpassed. The high load acting on the driven gear provides sufficient kinetic energy to the pawl 4016 to deform one or both of the axial projections 4134', 4136 and to reach the decoupled position.

## Claims

1. A clutch (2000; 3000) for a seat-belt tensioner in a vehicle, comprising a driving element (2002; 3002) adapted for being rotated in a driving direction (D) and in a releasing direction (R) and
a driven element (2006; 3006) connectable with a seat-belt spool, the driving element (2002; 3002) and the driven element (2006; 3006) having a common rotation axis (A),
a pawl (2016; 3016) being pivotally held on the driving element (2002; 3002) that can be pivoted around a pivoting axis (2018; 3018),
the clutch (2000; 3000) being adapted to assume a neutral position in which the pawl (2016; 3016) is not in engagement with the driven element (2006; 3006) and from which it can be pivoted radially inwards by turning the driving element (2002; 3002) in driving direction (D), an engaged position in which the pawl (2016; 3016) engages the driven element (2006; 3006) and couples the driving element (2002; 3002) with the driven element (2006; 3006), and a decoupled position in which the pawl (2016; 3016) is not in engagement with the driven element (2006; 3006) and cannot be engaged with the driven element (2006; 3006) by turning the driving element (2002; 3002) in driving direction (D),
a clutch disk element (2022; 3022) having a clutch disk ring (2024; 3024) with an outer essentially circular circumference and a clutch disk arm (2036; 3036) extending inwards from the clutch disk ring (2024; 3024), the clutch disk arm (2036; 3036) having a guiding geometry (2038; 3038) that interacts with a guiding geometry (2040; 3040) provided on the pawl (2016; 3016) to guide the pawl (2016; 3016),
a retainer ring (2054; 3054) surrounding the outer circumference of the clutch disk ring (2024; 3024) and being coupled by friction with the clutch disk ring (2024; 3024), the retainer ring (2054; 3054) being configured for a limited rotation relative to a retaining structure (2058) arranged immovable on a clutch housing,
wherein the clutch (2000; 3000) is configured so that in the decoupled position the clutch disk ring (2024; 3024) is disabled from rotating relative to the pawl (2016; 3016) when the driving element (2002; 3002) rotates in driving direction (D).

2. Clutch according to claim 1, **characterized in that** no force component acts on the pawl (2016; 3016) that is directed radially inwards when the driving element (2002; 3002) rotates in driving direction (D) and the pawl (2016; 3016) is in the decoupled position.

3. Clutch according to claim 1 or claim 2, **characterized in that** the geometry of the clutch disk ring (3024) deviates in the decoupled position from the geometry of the clutch disk ring (3024) in the neutral position.

4. Clutch according to claim 1 or claim 2, **characterized in that** the relative position of the clutch disk arm (2036) and the pawl (2016) deviate in the decoupled position from the relative position of the clutch disk arm (2036) and the pawl (2016) in the neutral position.

5. Clutch according to any of the preceding claims, **characterized in that** the pawl (2016) has a decoupling geometry, in particular formed by a web-like protrusion (2106), located between and distanced from left and right side guiding faces (2074, 2076) of the guiding geometry (2040) on the pawl (2016).

6. Clutch according to claim 5, **characterized in that** the clutch disk arm (2036) is bifurcated into a first and a second branch (2036a, 2036b) being distanced from each other, in the decoupled position the decoupling geometry (2040) of the pawl (2016) being located between the first and second branch (2036a, 2036b) so that the pawl (2016) is blocked from returning into the engaged position and into the neutral position.

7. Clutch according to any of the preceding claims, **characterized in that** in the decoupled position, a guiding face (2076) on the pawl (2016) facing in driving direction (D) is oriented essentially along the radial direction so that the a force in tangential direction is exerted on the pawl (2016) when the driving element (2002) rotates in driving direction (D) and/or a guiding face (2122) on the pawl (2016) facing in releasing direction (R) is oriented in an outward direction so that a force with a radially outwards directed component is exerted on the pawl (2016) when the driving element (2002) rotates in releasing direction (R).

8. Clutch according to any of claims 1 to 3, **characterized in that** in the decoupled position, the friction between the retainer ring (3054) and the clutch disk ring (3024) is reduced to such an amount that the friction coupling between the retainer ring (3054) and the clutch disk ring (3024) is neutralized.

9. Clutch according to claim 8, **characterized in that** the clutch disk ring (3024) is discontinuous in circumferential direction (U), the first and second circumferential ends (3032, 3034) of the clutch disk ring (3024) being biased outwardly in a circumferential direction, a latching connection (3124) being provided between the circumferential ends (3032, 3034).

10. Clutch according to claim 8 or claim 9, **characterized in that** the diameter of the outer circumference of the clutch disk ring (3024) is permanently reduced when the latching connection (3124) is closed.

11. Clutch according to any of claims 8 to 10, **characterized in that** a frictional force between the clutch disk ring (3024) and the retainer ring (3054) is reduced so far that the clutch disk element (3022) cannot be retained by the retainer ring (3054) and always rotates with the driving element (3002) without relative rotation with regard to the driving element (3002), when the latching connection (3124) is closed.

12. Clutch according to any of claims 8 to 11, **characterized in that** the latching connection (3124) is arranged parallel to an expansion spring (3030) bridging a gap (3028) between the first and the second circumferential end (3032, 3034), and in the closed state of the latching connection (3124) the expansion spring (3030) is compressed to a higher degree than when the latching connection (3124) is in its open state.

13. Method for transferring a clutch according to any of claims 8 to 12 from an engaged position into a decoupled position, wherein the clutch disk ring (3024) is compressed by an impulse transmitted by the driven element (3006) to the clutch disk ring (3024) in the initial phase of the decoupling process and the latching connection (3124) is closed.
